# EUROPÄISCHE PATENTSCHRIFT

(11) **EP 3 533 572 B1**
(45) Veröffentlichungstag und Bekanntmachung des Hinweises auf die Patenterteilung: **29.09.2021**
(21) Anmeldenummer: 19157368.2
(22) Anmeldetag: 15.02.2019
(51) Int. Cl.: B27B 31/00, B25J 9/00, B27B 5/065

(54) **PLATTENAUFTEILANLAGE SOWIE VERFAHREN ZUM BETREIBEN EINER PLATTENAUFTEILANLAGE**
PLATE SEPARATING INSTALLATION AND METHOD FOR OPERATING SAME
INSTALLATION DE DÉCOUPE DE PANNEAUX AINSI QUE PROCÉDÉ DE FONCTIONNEMENT D'UNE INSTALLATION DE DÉCOUPE DE PANNEAUX

(30) Priorität: 21.02.2018 DE 102018103870
(43) Veröffentlichungstag der Anmeldung: 04.09.2019
(73) Patentinhaber: HOMAG Plattenaufteiltechnik GmbH, 75365 Calw (DE)
(72) Erfinder: Erbele, Matthias, 72218 Wildberg (DE); Keim, Stefan, 75365 Calw (DE)
(74) Vertreter: DREISS Patentanwälte PartG mbB

(56) Entgegenhaltungen:
- EP-A1- 1 627 704
- DE-A1- 19 637 954
- DE-A1-102015 206 824

## Beschreibung

### Beschreibung

Die Erfindung betrifft eine Plattenaufteilanlage sowie ein Verfahren zum Betreiben einer Plattenaufteilanlage nach den Oberbegriffen der nebengeordneten Patentansprüche.

Die DE 10 2015 206 824 A1 beschreibt eine Werkstückbearbeitungsanlage in Form einer Plattenaufteilanlage. Bei dieser kann ein auf einem Auflagetisch, beispielsweise einem Zuführtisch, einem Maschinentisch oder einem Entnahmetisch liegendes einzelnes plattenförmiges Werkstück durch eine Handhabungseinrichtung gehandhabt werden. Hierzu verfügt die Handhabungseinrichtung über eine maschinell betreibbare Bewegungseinrichtung in Form eines Roboters, der einen Roboterarm aufweist, an dessen Ende eine Basisstruktur befestigt ist. Die Basisstruktur trägt eine sogenannte "Saugtraverse" mit einer Vielzahl von pneumatischen Saugglocken. Diese können an einer Oberseite des Werkstücks angreifen und dieses auf diese Weise anheben und transportieren. Bekannt ist aus der DE 10 2015 206 824 A1 auch, dass der Roboter in der Lage sein kann, ein flach auf dem Entnahmetisch liegendes Werkstück schiebend zu transportieren.

Vom Markt her bekannt ist es ferner, auf einem Auflagetisch liegende Werkstückstapel manuell handzuhaben. Hierzu ist der Auflagetisch beispielsweise als Luftkissentisch ausgebildet.

Ein auf einem solchen Luftkissentisch liegender Werkstückstapel kann dann von einer Bedienperson manuell verschoben, gedreht und/oder ausgerichtet werden.

Die DE 196 37 954 A1 beschreibt eine Plattenaufteilanlage gemäß dem Oberbegriff des Patentanspruchs 1, mit einer Sägevorrichtung mit Quertraversen und Anschlagvorrichtungen, welche es gestatten, Plattenteile voneinander wegzubewegen. Die DE 10 2015 206 824 A1 beschreibt eine Plattenaufteilanlage mit einem Roboter zum Handling der Werkstücke.

Aufgabe der vorliegenden Erfindung ist es, die Handhabung eines auf einem Auflagetisch liegenden Werkstücks, insbesondere eines auf einem Auflagetisch liegenden Werkstückstapels, zu vereinfachen und zu automatisieren.

Diese Aufgabe wird durch eine Plattenaufteilanlage und ein Verfahren mit den Merkmalen des jeweiligen nebengeordneten Patentanspruchs gelöst. Vorteilhafte Weiterbildungen sind in Unteransprüchen angegeben. Darüber hinaus finden sich für die Erfindung wesentliche Merkmale auch in der nachfolgenden Beschreibung und in der beigefügten Zeichnung. Dabei können diese Merkmale für die Erfindung sowohl in Alleinstellung als auch in unterschiedlichen Kombinationen für die Erfindung wesentlich sein, ohne dass hierauf nochmals im Detail hingewiesen werden wird.

Die erfindungsgemäße Plattenaufteilanlage umfasst eine Handhabungseinrichtung zum Handhaben mindestens eines auf einem Auflagetisch liegenden Werkstücks, vorzugsweise eines Stapels von vorzugsweise plattenförmigen Werkstücken. Die Handhabungseinrichtung umfasst eine oberhalb von dem mindestens einen Werkstück anordenbare Basisstruktur. Diese umfasst einen Verbindungsabschnitt, mit dem die Verbindungsstruktur mit einer maschinell betreibbaren Bewegungseinrichtung, insbesondere einem Roboter, verbunden werden kann. Beispielsweise kann der Verbindungsabschnitt mit einer automatischen Wechseleinrichtung zusammenwirken, mittels der fernbedienbar unterschiedliche Einrichtungen an der Bewegungseinrichtung befestigt werden können. Mittels einer solchen Wechseleinrichtung können auch pneumatische, elektrische und/oder hydraulische Verbindungen automatisch hergestellt und auch wieder gelöst werden. Derartige automatische Wechseleinrichtungen sind beispielsweise unter dem Begriff "Werkzeugwechsler" bekannt.

Durch die Bewegungseinrichtung kann die Basisstruktur bewegt werden. Die Bewegungsmöglichkeit umfasst dabei im Normalfall die Möglichkeit einer Bewegung längs zu allen drei kartesischen Raumrichtungen, also in zwei horizontalen und zueinander orthogonalen Richtungen und in einer hierzu orthogonalen vertikalen Richtung, und selbstverständlich auch die Möglichkeit einer Bewegung, welche lediglich Komponenten in zwei oder drei der gerade genannten Richtungen aufweist. Darüber hinaus umfasst die Bewegungsmöglichkeit auch mindestens eine Drehbewegung um eine vertikale Achse. In einem nicht erfindungsgemäßen Ausführungsbeispiel ist aber auch eine Bewegungsmöglichkeit in nur einer einzigen horizontalen Richtung denkbar. Weiterhin umfasst die Basisstruktur eine Mehrzahl von pneumatischen Saugeinrichtungen, insbesondere von Saugglocken, für ein Angreifen an einer Materialoberfläche des mindestens einen Werkstücks.

Zu der Erfindung gehört, dass an der Basisstruktur mindestens eine sich wenigstens zeitweise nach unten erstreckende erste Anlegeeinrichtung angebracht ist, die an einem ersten seitlichen Rand des mindestens einen auf dem Auflagetisch liegenden Werkstücks in Anlage gebracht werden kann. Auf diese Weise wird die Möglichkeit geschaffen, dass ein auf dem Auflagetisch liegendes Werkstück bzw. ein auf dem Auflagetisch liegender Werkstückstapel von der zumindest mehr oder weniger oberhalb von dem Werkstück angeordneten Basisstruktur mittels der nach unten abragenden Anlegeeinrichtung verschoben werden kann.

Dabei ist es nicht erforderlich, dass in dem Auflagetisch irgendwelche Vertiefungen vorhanden sind oder sonstige Veränderungen vorgenommen werden (entsprechend beispielsweise den Spannzangennuten bei bekannten Plattenaufteilanlagen). Vielmehr wird im Betrieb der Anlegeabschnitt so angeordnet, dass sein abragendes unteres Ende in einem geringen Abstand vom Auflagetisch angeordnet ist. Somit ist man auch nicht auf vorgegebene Bewegungsrichtungen beschränkt, sondern kann den Anlegeabschnitt und somit auch das Werkstück bzw. den Werkstückstapel in nahezu beliebige horizontale Richtungen bewegen. Anders als bei der aus dem Stand der Technik bekannten Saugtraverse gestattet es die Erfindung ferner, auf sehr einfache Art und Weise nicht nur einzelne Werkstücke, sondern einen ganzen Werkstückstapel zu bewegen.

Eine erste Weiterbildung der Erfindung zeichnet sich dadurch aus, dass eine vertikale Position eines Anlegeabschnitts der ersten Anlegeeinrichtung relativ zu der Basisstruktur veränderbar ist. Dies hat unter anderem den Vorteil, dass die vertikale Position der Basisstruktur abhängig von der Dicke des Werkstücks bzw. der Dicke des Werkstückstapels optimal eingestellt werden kann. Auch ist es bei entsprechender Ausgestaltung möglich, den ersten Anlegeabschnitt soweit zurückzufahren, dass er über die Basisstruktur überhaupt nicht oder zumindest nicht wesentlich hinaussteht. Dies eröffnet zusätzliche Freiheiten im Hinblick auf weitere Anwendungen der Handhabungseinrichtung.

Dabei ist es besonders bevorzugt, wenn die Handhabungseinrichtung einen maschinellen, insbesondere pneumatischen Antrieb für die Veränderung der vertikalen Position des Anlegeabschnitts der ersten Anlegeeinrichtung relativ zu der Basisstruktur umfasst. Hierdurch wird der Betrieb der Handhabungseinrichtung vereinfacht.

Möglich ist auch, dass die erste Anlegeeinrichtung zwei voneinander beabstandete Anlegeabschnitte umfasst. Diese können dann gleichzeitig in Anlage an den ersten seitlichen Rand des Werkstücks bzw. des Werkstückstapels gebracht werden, wodurch das Werkstück bzw. der Werkstückstapel besonders zuverlässig bewegt werden können, ohne dass eine ungewollte Drehung des Werkstücks bzw. des Werkstückstapels zu befürchten ist.

Vorgeschlagen wird auch, dass an der Basisstruktur mindestens eine sich wenigstens zeitweise nach unten erstreckende zweite Anlegeeinrichtung angebracht ist, die an einem zweiten seitlichen Rand des mindestens einen auf dem Auflagetisch liegenden Werkstücks in Anlage gebracht werden kann, wobei der zweite seitliche Rand entgegengesetzt und wenigstens im Wesentlichen parallel zu dem ersten seitlichen Rand des mindestens einen Werkstücks angeordnet ist. Hierdurch wird der Anwendungsbereich der Handhabungseinrichtung erweitert. Beispielsweise wird es hierdurch auf einfache Art und Weise ermöglicht, eine Fehlpositionierung eines Werkstücks bzw. eines Werkstückstapels auf dem Auflagetisch in der einen Richtung (durch die erste Anlegeeinrichtung bewirkt) durch eine Bewegung in der entgegengesetzten Richtung zu korrigieren.

In einer konkreten Weiterbildung hierzu wird vorgeschlagen, dass ein Anlegeabschnitt der ersten Anlegeeinrichtung und ein Anlegeabschnitt der zweiten Anlegeeinrichtung so in einem veränderbaren Abstand voneinander angeordnet sind, dass das mindestens eine auf dem Auflagetisch liegende Werkstück zwischen dem Anlegeabschnitt der ersten Anlegeeinrichtung und dem Anlegeabschnitt der zweiten Anlegeeinrichtung verklemmt werden kann. Hierdurch wird die Positioniergenauigkeit erhöht, und es wird die Flexibilität bei der Handhabung eines Werkstücks bzw. eines Werkstückstapels vergrößert.

Insbesondere kann je nach der Beschaffenheit der Werkstückoberfläche von einer Steuereinrichtung der Plattenaufteilanlage, bspw. auf der Basis von Sensordaten und/oder eingegebener Werkstückparameter, automatisch ermittelt werden, ob das Werkstück mittels der Saugeinrichtung oder mittels der ersten und zweiten Anlegeeinrichtung zu greifen bzw. handzuhaben ist. Bevorzugt wird unterhalb einer vordefinierten Größe der Rauheit der Werkstückoberfläche des Werkstücks die Saugeinrichtung zum Greifen des Werkstücks verwendet und ab der vordefinierten Größe der Rauheit der Werkstückoberfläche das Werkstück mittels der ersten und zweiten Anlegeeinrichtung gegriffen bzw. gehandhabt, um zu verhindern, dass es zu einer Fehlfunktion beim Greifen des Werkstücks wegen einer unzureichenden Saugkraft der Saugeinrichtung kommt.

Konkret kann dies dadurch geschehen, dass ein Anlegeabschnitt der ersten Anlegeeinrichtung in in Betriebslage horizontaler Richtung relativ zur Basisstruktur stationär ist, und dass ein Anlegeabschnitt der zweiten Anlegeeinrichtung in mindestens einer in Betriebslage horizontalen Richtung relativ zur Basisstruktur beweglich ist. Dies ist einfach und preisgünstig realisierbar.

Bevorzugt ist dabei, dass die zweite Anlegeeinrichtung als Anlegeabschnitt mindestens einen Schieber umfasst, der quer zu der in Betriebslage horizontalen Bewegungsrichtung länglich ist. Dies sorgt für eine Verteilung der Klemmkraft über eine vergleichsweise große Fläche, wodurch Beschädigungen an dem Werkstück bzw. an den Werkstückstapel vermieden werden.

Dabei wird der Betrieb der Handhabungseinrichtung vereinfacht, wenn sie einen maschinellen, insbesondere pneumatischen Antrieb für die Bewegung des Anlegeabschnitts der zweiten Anlegeeinrichtung umfasst.

Weiterhin ist dabei denkbar, dass eine vertikale Position des Anlegeabschnitts der zweiten Anlegeeinrichtung relativ zu der Basisstruktur veränderbar ist. Dies ist insbesondere vorteilhaft bei der Handhabung eines einzelnen Werkstücks auf dem Auflagetisch, bei einem Ausrichten gegen ein Winkellineal, sowie bei der Verwendung von Saugeinrichtungen an der Basisstruktur.

Die Basisstruktur ist um eine vertikale Achse, insbesondere mittels eines Antriebs, drehbar. Auf diese Weise kann ein auf dem Auflagetisch liegendes Werkstück bzw. ein auf dem Auflagetisch liegender Werkstückstapel durch die Handhabungseinrichtung gedreht werden. Somit gestattet die Handhabungseinrichtung beispielsweise bei einer Plattenaufteilanlage die neue Orientierung und die neue Positionierung eines Werkstücks bzw. eines Werkstückstapels nach einem Längsschnitt für einen darauffolgenden Querschnitt. Vorgeschlagen wird auch, dass an der Basisstruktur mindestens eine sich wenigstens zeitweise nach unten erstreckende dritte Anlegeeinrichtung angebracht ist, die an einem dritten seitlichen Rand des mindestens einen auf dem Auflagetisch liegenden Werkstücks in Anlage gebracht werden kann, wobei der dritte seitliche Rand wenigstens im Wesentlichen orthogonal zu dem ersten seitlichen Rand und dem zweiten seitlichen Rand angeordnet ist. Eine solche Anlegeeinrichtung kann beispielsweise zum Ausrichten eines Werkstücks bzw. eines Werkstückstapels, während dieser durch die erste Anlegeeinrichtung und/oder durch die zweite Anlegeeinrichtung noch beaufschlagt ist, verwendet werden. Damit wird die Funktionalität der Handhabungseinrichtung nochmals erweitert.

Wiederum ist dabei denkbar, dass eine vertikale Position des Anlegeabschnitts der dritten Anlegeeinrichtung relativ zu der Basisstruktur veränderbar ist. Beispielsweise dann, wenn eine Handhabung nur mittels der ersten Anlegeeinrichtung und/oder mittels der zweiten Anlegeeinrichtung gewünscht ist, kann auf diese Weise der Anlegeabschnitt der dritten Anlegeeinrichtung vollständig oder zumindest sehr deutlich zurückgefahren werden.

Der Betrieb der Handhabungseinrichtung wird dadurch vereinfacht, dass sie einen maschinellen, insbesondere pneumatischen Antrieb für die Veränderung der vertikalen Position des Anlegeabschnitts der dritten Anlegeeinrichtung relativ zu der Basisstruktur umfasst.

Die Anlegeeinrichtung(en) kann bzw. können einen gekrümmten oder einen geraden Anlegeabschnitt umfassen. Ein gekrümmter Anlegeabschnitt ist einfach realisierbar, beispielsweise durch eine Kolbenstange eines Pneumatikzylinders. Er gestattet darüber hinaus das Anlegen und Bewegen in mehr als nur einer Raumrichtung. Ein gerader Anlegeabschnitt hat dagegen den Vorteil, dass die Kontaktfläche zwischen Anlegeeinrichtung und seitlichem Rand des Werkstücks bzw. des Werkstückstapels vergrößert und hierdurch die Gefahr von Beschädigungen verringert wird.

Vorgeschlagen wird auch, dass mindestens ein Anlegeabschnitt wenigstens zu dem mindestens einen Werkstück hin ein elastisches Material umfasst bzw. umfassen. Hierdurch wird ebenfalls die Gefahr von Beschädigungen des seitlichen Rands des Werkstücks bzw. des Werkstückstapels verringert.

Vorgeschlagen wird auch, dass mindestens ein Anlegeabschnitt zu dem Werkstück hin federnd gelagert ist. Auch dies dient dazu, die Gefahr von Beschädigungen eines seitlichen Randes des Werkstücks bzw. des Werkstückstapels zu verringern. Durch die gefederte Lagerung kann eine vorgegebene Kraft zum andrücken an den jeweiligen seitlichen Rand des Werkstücks realisiert werden. Außerdem können die Kräfte beim Ausrichten des mindestens einen Werkstücks gegen ein Winkellineal und/oder gegen mindestens eine Spannzange relativ genau eingestellt bzw. Material spezifisch geregelt werden. Die Federung kann pneumatisch als auch mechanisch ausgeführt sein. Wird eine pneumatische Federung eingesetzt, kann diese servopneumatisch für eine materialabhängige Druckregulierung ausgeführt werden.

Möglich ist ferner, dass die Saugeinrichtung dann, wenn die mindestens eine Anlegeeinrichtung betrieben wird, ausgeschaltet ist oder mit stark reduzierter Saugleistung betrieben wird, insbesondere mit einer auf 5 - 25 % reduzierten Saugleistung gegenüber einer beim Greifen des Werkstücks mittels der Saugeinrichtung verwendeten Saugleistung, und die Basisstruktur so positioniert wird, dass die Saugeinrichtung von einer Oberseite des Werkstücks bzw. eines Werkstückstapels beabstandet ist. Hierdurch wird eine ungewünschte Beeinflussung der Position des mindestens einen Werkstücks durch die Saugeinrichtung während der Handhabung mittels der mindestens einen Anlegeeinrichtung verhindert. Grundsätzlich denkbar ist jedoch auch, dass die Saugeinrichtung während der Handhabung des mindestens einen Werkstücks durch die mindestens eine Anlegeeinrichtung betrieben und unterstützend eingesetzt wird.

In einer weiteren bevorzugten Ausführungsform umfasst die Plattenaufteilanlage eine Pneumatiksteuerung, mittels der die Saugeinrichtung mit einem ersten vordefinierten Unterdruck und einem zweiten vordefinierten Unterdruck betrieben werden kann, wobei die vordefinierten Unterdrücke vorzugsweise von einem Werkstückgewicht abhängen, und wobei der erste vordefinierte Unterdruck ausreicht, um das Werkstück anzuheben, und der zweite vordefinierte Unterdruck ausreicht, um das Werkstück schiebend über den Auflagetisch zu bewegen. Durch die Unterscheidung zwischen einem angehobenen Transport des Werkstücks und einem schiebenden Transport des Werkstücks kann Saugleistung und damit auch Energie beim schiebenden Transport des Werkstücks eingespart werden, denn beim schiebenden Transport lastet nicht das volle Gewicht des Werkstücks an der Saugeinrichtung und ein Sicherheitspuffer mit einer überhöhten Saugleistung, die vor einem Herabfallen des Werkstücks schützt, ist nicht notwendig. Das Werkstückgewicht kann dabei beispielsweise aus den Abmessungen des Werkstücks gemäß Schnittplan und dem Material des Werkstücks ermittelt werden. Auch kann bei der Bestimmung des vordefinierten Unterdrucks ein Oberflächenparameter des Werkstücks und/oder eine Anzahl der zum Einsatz kommenden Teilsaugeinrichtungen berücksichtigt werden.

In einer weiteren Ausgestaltungsform umfasst die Plattenaufteilanlage eine Positionserkennungseinrichtung bevorzugt als Teil der Steuerungseinrichtung der Plattenaufteilanlage oder der Handhabungseinrichtung insbesondere für das Erfassen einer insbesondere relativen Position zwischen dem auf dem Auflagetisch liegenden Werkstück bzw. Werkstückstapel und der Handhabungseinrichtung. Grundsätzlich ist eine solche Positionserkennungseinrichtung in Form einer Bilderfassungseinrichtung aus der WO 2015/135686 A1 bekannt.

Beispielsweise heißt es dort im Abs. 0005, dass anhand der Bilderfassungseinrichtung die in der Plattenbearbeitungsanlage befindlichen Werkstücke und deren Zustand erkannt werden, und dass entsprechend automatisch und ohne Zutun der Bedienperson der Betrieb der Plattenbearbeitungsanlage eingestellt wird.

Gemäß einer ersten Funktionalität ist die Positionserkennungseinrichtung dazu eingerichtet zu überwachen, ob das Werkstück nach dem Ausschalten der Saugeinrichtung bzw. der Saugeinrichtungen freigegeben ist, insbesondere, ob die Saugeinrichtung vom Werkstück beabstandet ist. Die Verwendung einer solchen ersten Funktionalität ist insbesondere bei einem wechselseitigen Betrieb von einer der Anlegeeinrichtungen mit mindestens einer der Saugeinrichtungen von Vorteil, um ein Bewegen des Werkstücks mittels der Anlegeeinrichtung zu verhindern, solange das Werkstück von der Saugeinrichtung bzw. den Saugeinrichtungen noch nicht freigegeben ist. Dadurch können bei gleichzeitigem Festhalten des Werkstücks durch die Saugeinrichtung und Bewegen des Werkstücks durch die Anlegeeinrichtung durch die Saugeinrichtung an der Oberseite des Werkstücks bewirkte Beschädigungen und durch die Anlegeeinrichtung am Randbereich des Werkstücks bewirkte Beschädigungen vermieden werden. Die Positionserkennungseinrichtung kann insbesondere eine entsprechende Sensorik umfassen, bspw. einen optischen Sensor, wie beispielsweise einen fotoelektrischen Sensor, einen Lasersensor oder eine CCD-Kamera, der die Messsignale an eine Steuerungseinrichtung der Plattenaufteilanlage oder an eine separate Steuerungseinrichtung der Handhabungseinrichtung sendet, so dass die jeweilige Steuerungseinrichtung aus den Messsignalen einen Abstand zwischen der Saugeinrichtung bzw. den Saugeinrichtungen und dem Werkstück ermitteln kann und entsprechende Steuerungsbefehle ableitet. In alternativen Ausführungsbeispielen umfasst die Sensorik einen elektromagnetischer, mechanischen oder akustischen Sensor.

Gemäß einer zweiten bevorzugten Funktionalität ist die Positionserkennungseinrichtung dazu eingerichtet zu überwachen, ob vor dem in Anlage bringen der mindestens einen Anlegeeinrichtung an den seitlichen Rand des Werkstücks oder des Werkstückstapels zumindest ein Seitenrand des Werkstücks oder des Werkstückstapels bei Annäherung der Handhabungseinrichtung an das Werkstück bzw. den Werkstückstapel einen vordefinierten horizontalen Abstand zu der mindestens einen Anlegeeinrichtung erreicht hat oder ob vor dem Ansaugen des Werkstücks mittels der Saugeinrichtung bzw. der Saugeinrichtungen alle für das Ansaugen vordefinierten Saugeinrichtungen sich vollständig vertikal über der Oberfläche des Werkstücks befinden. Dadurch wird zum einen bezweckt, dass Beschädigungen in den Randbereichen des Werkstücks durch eine unkontrollierte Berührung der Handhabungseinrichtung mit dem Werkstück vermieden werden, insbesondere wenn dieses Werkstück durch eine nichtvorhersehbare Bewegung nicht an der berechneten bzw. vorausgesehenen Position liegt. Zum anderen wird die Ansaugsicherheit erhöht, weil keine der Saugteileinrichtungen über einen Randbereich des Werkstücks übersteht und dadurch die Ansaugkraft nicht vermindert wird. Wiederum kann die Positionserkennungseinrichtung insbesondere eine entsprechende Sensorik umfassen, beispielsweise eine Bilderkennungseinrichtung und/oder einfache Drucksensoren oder einfach Abstandssensoren, bspw. auf Ultraschall- oder Infrarotbasis. Es versteht sich ferner, dass letztlich eine relative Position zwischen Seitenrand und Anlegeeinrichtung bzw. zwischen Werkstückoberfläche und Saugteileinrichtungen ermittelt werden muss.

Gemäß einer dritten bevorzugten Funktionalität ist die Positionserkennungseinrichtung dazu eingerichtet zu überwachen, dass ein vertikales unteres Ende der Anlegeeinrichtung bei Annäherung der Handhabungseinrichtung an das Werkstück bzw. den Werkstückstapel einen vordefinierten Abstand zur Auflagefläche des Werkstücks bzw. Werkstückstapels nicht unterschreitet. Somit können Berührungen zwischen der Handhabungseinrichtung und der Auflagefläche des Werkstücks vermieden werden, die möglicherweise zu unkontrollierbaren Bewegungen der Handhabungseinrichtung und damit zu Beschädigungen am Werkstück führen könnten. Wiederum kann die Positionserkennungseinrichtung insbesondere eine entsprechende Sensorik umfassen, beispielsweise eine Bilderkennungseinrichtung oder einfach Abstandssensoren, bspw. auf Ultraschall- oder Infrarotbasis. Es versteht sich ferner, dass letztlich ein Abstand zwischen einem untersten Ende der Handhabungseinrichtung und der Auflagefläche für das Werkstück bzw. den Werkstückstapel ermittelt werden muss.

Alternativ können die verschiedenen Funktionalitäten der Positionserkennungseinrichtung auch durch separate Positionserkennungseinrichtungen realisiert werden.

Möglich ist auch, dass die Plattenaufteilanlage eine stationäre Anlegeeinrichtung, insbesondere ein Winkellineal, umfasst, wobei ein auf dem Auflagetisch liegendes Werkstück mittels der ersten Anlegeeinrichtung gegen die stationäre Anlegeeinrichtung beaufschlagbar ist. Die stationäre Anlegeeinrichtung kann insbesondere ein höhenverstellbares Winkellineal für die Ausrichtung des mindestens einen Werkstücks bzw. des Werkstückstapels umfassen, wobei die Plattenaufteilanlage dazu eingerichtet ist, eine vertikale Position, insbesondere eine maximale Höhe, des Winkellineals in Bezug auf eine Auflagefläche des mindestens einen Werkstücks bzw. des Werkstückstapels an die Höhe des mindestens einen Werkstücks bzw. des Werkstückstapels und/oder an eine momentane Position der Handhabungseinrichtung automatisch anzupassen. Dies erlaubt zum einen verschieden dicke Werkstücke bzw. Werkstückstapel an dem Winkellineal auszurichten und zum anderen einen ausreichenden Abstand, insbesondere vertikalen Abstand, zwischen dem Winkellineal und der Handhabungseinrichtung einzuhalten, um Kollisionen zwischen der Handhabungseinrichtung und dem nach oben hervorstehenden Winkellineal zu vermeiden.

Zu der Erfindung gehört auch ein Verfahren zum Betreiben einer Plattenaufteilanlage der oben beschriebenen Art. Dabei wird vorgeschlagen, dass das Verfahren die folgenden Schritte umfasst: Bewegen der Handhabungseinrichtung über das mindestens eine auf dem Auflagetisch liegende Werkstück so, dass die erste Anlegeeinrichtung an dem ersten seitlichen Rand des mindestens einen auf dem Auflagetische liegenden Werkstücks angeordnet ist und Verschieben des mindestens einen auf dem Auflagetisch liegenden Werkstücks von der zumindest mehr oder weniger oberhalb von dem mindestens einen Werkstück angeordneten Basisstruktur mittels der nach unten abragenden Anlegeeinrichtung. Die Vorteile eines solchen Verfahrens entsprechen denjenigen der oben beschriebenen Plattenaufteilanlage.

Das Verfahren kann ferner den folgenden Schritt umfassen: Bewegen des Anlegeabschnitts der zweiten Anlegeeinrichtung so, dass das mindestens eine auf dem Auflagetische liegende Werkstück zwischen dem Anlegeabschnitt der ersten Anlegeeinrichtung und dem Anlegeabschnitt der zweiten Anlegeeinrichtung verklemmt wird. Hierdurch wird, wie ebenfalls bereits oben erwähnt wurde, vor allem die Flexibilität bei der Handhabung erweitert. Beispielsweise ist es möglich, das verklemmte und auf dem Auflagetisch liegende mindestens eine Werkstück zu drehen.

Vorgeschlagen wird auch, dass das Verfahren ferner den folgenden Schritt umfasst: Drehen der Basisstruktur zusammen mit dem verklemmten oder angesaugten und auf dem Auflagetisch liegenden mindestens einen Werkstück. Auf diese Weise kann beispielsweise ein auf dem Auflagetisch liegendes Werkstück oder ein auf dem Auflagetisch liegender Werkstückstapel zwischen einer Queraufteilung und einer Längsaufteilung gedreht werden.

Das Verfahren kann ferner den folgenden Schritt umfassen: Beaufschlagen des mindestens einen auf dem Auflagetisch liegenden Werkstücks mittels des Anlegeabschnitts der ersten Anlegeeinrichtung gegen eine stationäre Anlegeeinrichtung, insbesondere gegen ein Winkellineal einer Werkstückbearbeitungsanlage, insbesondere einer Plattenaufteilanlage. Hierdurch wird das Werkstück bzw. wird der Werkstückstapel ausgerichtet. Gegenüber dem Beaufschlagen des Werkstücks gegen ein Winkellineal mittels einer Saug-Greifeinrichtung wie in der oben erwähnten DE 10 2015 206 824 A1 führt die Beaufschlagung mittels der ersten Anlegeeinrichtung zu einer höheren Präzision sowie Maß- und Winkelgenauigkeit bei der Aufteilung des Werkstücks.

In einer weiteren bevorzugten Ausführungsform umfasst das Verfahren ferner die folgenden Schritte:
- Ansaugen des mindestens einen auf dem Auflagetisch liegenden Werkstücks mittels der Saugeinrichtung oder der Saugeinrichtungen,
- Bewegen des mindestens einen auf dem Auflagetisch liegenden Werkstücks zu der stationären Anlegeeinrichtung, und
- Freigeben des mindestens einen auf dem Auflagetisch liegenden Werkstücks durch die Saugeinrichtung oder die Saugeinrichtungen vor dem Schritt des Beaufschlagens des mindestens einen auf dem Auflagetisch liegenden Werkstücks mittels der ersten Anlegeeinrichtung gegen die stationäre Anlegeeinrichtung.

Dabei wird bevorzugt das Freigeben des mindestens einen auf dem Auflagetisch liegenden Werkstücks durch die Saugeinrichtung bzw. die Saugeinrichtungen von der oben beschriebenen Positionserkennungseinrichtung überwacht. Diese Verfahrensvariante ermöglicht ein grobes Verschieben des Werkstücks mittels der Saugeinrichtung bzw. Saugeinrichtungen über lange Strecken und ein genaues Positionieren des Werkstücks mittels einer Anlegeeinrichtung über kurze Strecken. Ferner verhindert die Kontrolleinrichtung Beschädigungen an der Oberseite des Werkstücks, da ein Positionieren des Werkstücks erst erfolgt, wenn die Saugeinrichtung bzw. Saugeinrichtungen das Werkstück freigegeben hat bzw. haben.

Vorgeschlagen wird auch, dass das Verfahren ferner den folgenden Schritt umfasst: Beaufschlagen des mindestens einen auf dem Auflagetisch liegenden Werkstücks mittels des Anlegeabschnitts der dritten Anlegeeinrichtung gegen eine wenigstens zeitweise stationäre Anlegeeinrichtung, insbesondere gegen wenigstens eine Spannzange einer Fördereinrichtung der Plattenaufteilanlage. Hierdurch kann das Werkstück bzw. kann der Werkstückstapel insbesondere dann, wenn er an dem Winkellineal ausgerichtet ist, in einer parallel zu dem Winkellineal sich erstreckenden Richtung bewegt bzw. ausgerichtet werden.

Es versteht sich, dass, abhängig von der Größe des mindestens einen Werkstücks und abhängig von den geometrischen Verhältnissen oberhalb und seitlich von dem Auflagetisch, durch die ein so genannter "Kollisionsraum" mit der Handhabungseinrichtung definiert wird, bei einer Ausrichtung des mindestens einen Werkstücks gegen das oben erwähnte Winkellineal im Grundsatz jeder der Anlegeabschnitte der vorhandenen Anlegeeinrichtungen benutzt werden kann. Ferner versteht es sich, dass bei einem Ausrichtvorgang neben der jeweiligen Anlegeeinrichtung zusätzlich auch noch - wenn vorhanden - eine an der Basisstruktur vorhandene Saugeinrichtung eingesetzt werden kann, um die Handhabung des mindestens einen Werkstücks zu unterstützen.

Nachfolgend wird eine mögliche Ausführungsform der Erfindung unter Bezugnahme auf die Zeichnung beispielhaft erläutert. In der Zeichnung zeigen:
- Figur 1: eine Ansicht von unten auf eine schematisch dargestellte Basisstruktur einer Handhabungseinrichtung mit einer ersten Anlegeeinrichtung, einer zweiten Anlegeeinrichtung und einer dritten Anlegeeinrichtung;
- Figur 2: einen Schnitt längs der Linie II-II von Figur 1;
- Figur 3: eine perspektivische detaillierte Darstellung eines Teils der Handhabungseinrichtung der Figur 2;
- Figur 4: eine perspektivische detaillierte Darstellung einer Werkzeugmaschine in Form einer Plattenaufteilanlage mit einem Teil einer Handhabungseinrichtung zu einem ersten Zeitpunkt des Betriebs der Handhabungseinrichtung;
- Figur 5: eine perspektivische detaillierte Darstellung der Werkzeugmaschine von Figur 4 zu einem zweiten Zeitpunkt des Betriebs der Handhabungseinrichtung;
- Figur 6: eine perspektivische detaillierte Darstellung der Werkzeugmaschine von Figur 4 zu einem dritten Zeitpunkt des Betriebs der Handhabungseinrichtung;
- Figur 7: eine perspektivische detaillierte Darstellung der Werkzeugmaschine von Figur 4 zu einem vierten Zeitpunkt des Betriebs der Handhabungseinrichtung; und
- Figur 8: eine perspektivische detaillierte Darstellung der Werkzeugmaschine von Figur 4 zu einem fünften Zeitpunkt des Betriebs der Handhabungseinrichtung.

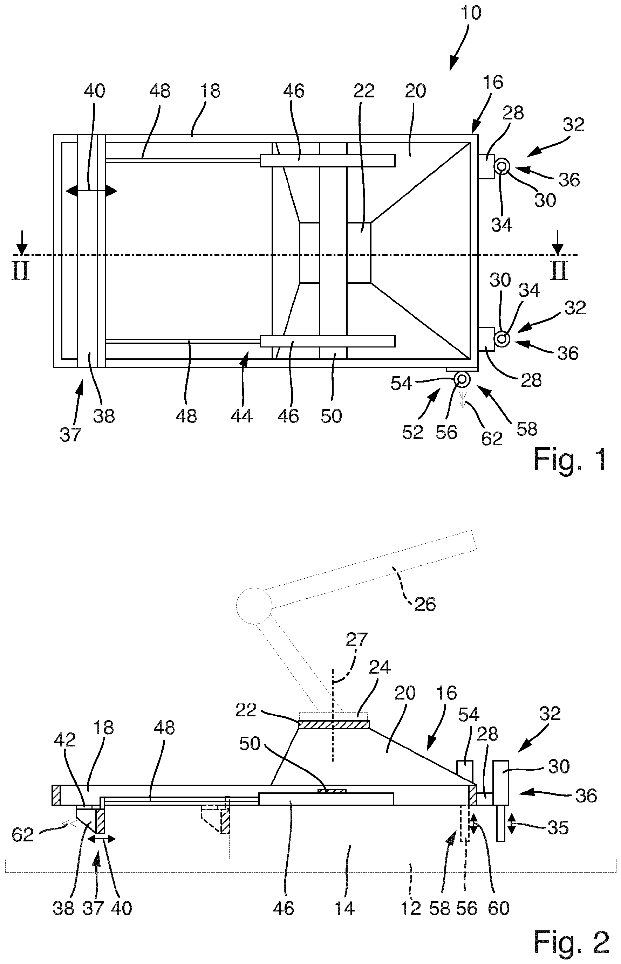

Eine Handhabungseinrichtung trägt in den Figuren insgesamt das Bezugszeichen 10. Sie dient zum Handhaben eines Werkstückstapels 14 bestehend aus einer Mehrzahl von aufeinanderliegenden plattenförmigen Werkstücken, der in Figur 2 lediglich gestrichelt angedeutet ist. Der Werkstückstapel 14 liegt vorliegend auf einem Auflagetisch 12, der ebenfalls lediglich gestrichelt angedeutet ist.

Die Handhabungseinrichtung 10 umfasst eine oberhalb von dem Werkstückstapel 12 anordenbare Basisstruktur 16, die vorliegend einen in der Draufsicht der Figur 1 im Wesentlichen rechteckigen länglichen Rahmen 18 und eine sich von diesem nach oben erstreckende und in den Figuren 1 und 2 lediglich angedeutete dreidimensionale Fachwerkkonstruktion 20 umfasst. Ebenfalls zu der Basisstruktur 16 gehört eine oberhalb von der Fachwerkkonstruktion 20 an dieser angeordnete Schnellwechselplatte 22.

In weiteren nicht dargestellten alternativen Ausführungsformen umfasst die Basisstruktur 16 anstelle des länglichen rechteckigen Rahmens 18 einen quadratischen oder kreisförmigen Rahmen. Gemäß weiterer nicht dargestellter alternativer Ausführungsformen umfasst die Handhabungseinrichtung 10 anstelle des Rahmens 18 ein kastenförmiges Gehäuse, in dem elektronische oder mechanische Steuerungs- und/oder Verstelleinrichtungen u.a. zum Schutz vor Staub und Sägespänen untergebracht sind.

In einem weiteren nicht gezeigten Ausführungsbeispiel kann die Schnellwechselplatte 22 direkt am Rahmen 18 oder dem kastenförmigen Gehäuse befestigt sein, so dass auf die dreidimensionale Fachwerkkonstruktion 20 verzichtet werden kann. Dies erlaubt einen möglichst flachen Aufbau der Handhabungseinrichtung 10 und erlaubt es der Handhabungseinrichtung 10 in den Bereich eines Sägespalts einer Plattenaufteilanlage, die im Folgenden noch beschrieben wird, verfahren zu werden, ohne mit einem darüber befindlichen Druckbalken zu kollidieren.

Die besagte Schnellwechselplatte 22 dient zur Verbindung der Basisstruktur 16 mit einer entsprechenden komplementären Anschlussplatte 24. Diese ist wiederum am abragenden Ende eines Roboterarms 26 eines nicht weiter dargestellten Roboters befestigt. Die Anschlussplatte 24 und der Roboterarm 26 sind in Figur 2 lediglich gestrichelt dargestellt. Sie bilden eine Bewegungseinrichtung, mit der die Basisstruktur 16 bewegt werden kann. Die Anschlussplatte 24 bildet einen Schnellwechsler, welcher die Verbindung unterschiedlicher Einrichtungen an dem Roboterarm 26 gestattet. Dabei werden durch die Schnellwechselplatte 22 und die Abschlussplatte 24 nicht nur die mechanische Verbindung, sondern beispielsweise auch elektrische und pneumatische Verbindungen automatisch hergestellt bzw. gelöst.

In einem weiteren nicht gezeigten Ausführungsbeispiel wird anstelle der Schnellwechselplatte 22 eine Adapterplatte verwendet oder der Rahmen 18 bzw. das kastenförmige Gehäuse umfasst einen Adapterbereich, um die Handhabungseinrichtung 10 bis zur Wartung oder zur Reparatur der Handhabungseinrichtung 10 mit dem Roboterarm 26 zu verbinden. Dabei werden von der Adapterplatte bzw. dem Adapterbereich separierte elektrische, mechanische und/oder pneumatische Verbindungen eingesetzt.

Im Detail in den Figuren nicht dargestellt ist ferner eine Drehvorrichtung, mittels der die Basisstruktur 16 relativ zu der Anschlussplatte 24 und dem Roboterarm 26 um eine vertikale Achse 27 (Figur 2) gedreht werden kann. Diese Drehvorrichtung umfasst auch einen Antrieb, beispielsweise einen pneumatischen oder elektrischen Antrieb, durch den die besagte Drehung bewirkt werden kann.

Von einem in den Figuren 1 und 2 rechten Rand des Rahmens 18 erstrecken sich zwei Halteabschnitte 28. Die Halteabschnitte 28 erstrecken sich bevorzugt in horizontaler Richtung vom Rahmen 18. In einer weiteren nicht dargestellten Ausführungsform erstrecken sich die Halteabschnitte in vertikaler Richtung vom Rahmen 18. An jedem Halteabschnitt 28 ist ein Zylinder 30 eines pneumatischen Antriebs 32 befestigt. In jedem Zylinder 30 ist eine Kolbenstange 34 in vertikaler Richtung verschieblich geführt. Die pneumatischen Antriebe 32 können so angesteuert werden, dass die Kolbenstange 34 entweder vollständig ausgefahren ist, wie in Figur 2 dargestellt ist, oder vollständig eingefahren ist, also über den unteren Rand des Rahmens 18 der Basisstruktur 16 nicht übersteht, oder sich in einer Zwischenstellung befindet, beispielsweise abhängig von der Höhe des Stapels aus Werkstücken oder abhängig von der Dicke eines einzelnen Werkstücks ausgefahren ist.

Die vertikale Position der Kolbenstange 34 ist also relativ zu der Basisstruktur 16 veränderbar. Dies wird auch durch den Doppelpfeil 35 in Figur 2 angedeutet. Wie weiter unten noch dargelegt werden wird, bilden die beiden Kolbenstangen 34 zwei voneinander beabstandete Anlegeabschnitte einer ersten Anlegeeinrichtung 36. da die Kolbenstange 34 einen kreisrunden Querschnitt haben, sind die Anlegeabschnitte 34 also vorliegend gekrümmt. Man erkennt außerdem, dass die erste Anlegeeinrichtung 36 bzw. deren Anlegeabschnitte 34 in horizontaler Richtung relativ zur Basisstruktur 16 stationär ist bzw. sind. In einer alternativen nicht dargestellten Ausführungsform ist die Anlegeeinrichtung 36 in horizontaler Richtung relativ zu der Basisstruktur 16 verschiebbar gelagert, wobei die Verschiebung mittels mindestens eines Antriebs bewirkt wird.

Unterhalb von der Basisstruktur 16 erstreckt sich über die gesamte Breite der Basisstruktur 16 eine zweite Anlegeeinrichtung 37 mit einem Anlegeabschnitt in Form eines Schiebers 38, der in einer horizontalen Richtung (Doppelpfeil 40) relativ zu der Basisstruktur 16 mittels zweier Linearlager 42, die an dem Rahmen 18 gehalten sind, beweglich ist. Man erkennt aus Figur 1, dass der Schieber 38 quer zu der horizontalen Bewegungsrichtung (Doppelpfeil 40) länglich ist, sich nämlich von einer Seite des Rahmens 18 bis zur anderen Seite des Rahmens 18 erstreckt.

Ferner ist ein maschineller, nämlich vorliegend pneumatischer Antrieb 44 für die horizontale Bewegung der zweiten Anlegeeinrichtung 37 entsprechend dem Doppelpfeil 40 vorgesehen. Dieser pneumatische Antrieb 44 umfasst zwei Zylinder 46, in denen jeweils eine Kolbenstange 48 geführt ist. Die beiden Zylinder 46 sind an einem Querträger 50 befestigt. Die in den Figuren gezeigte zweite Anlegeeinrichtung 37 ist in vertikaler Richtung relativ zu der Basisstruktur 16 fest. Grundsätzlich denkbar, jedoch nicht dargestellt ist eine Ausführungsform, bei der eine vertikale Position des Anlegeabschnitts der zweiten Anlegeeinrichtung relativ zu der Basisstruktur veränderbar ist, beispielsweise fernsteuerbar mittels eines entsprechenden Antriebs.

Zu der Handhabungseinrichtung 10 gehört auch noch ein weiterer pneumatischer Antrieb 52, der wiederum einen Zylinder 54 und eine in diesem geführte Kolbenstange 56 umfasst. Die Kolbenstange 56 bildet einen Anlegeabschnitt einer dritten Anlegeeinrichtung 58. Der Zylinder 54 ist seitlich am Rahmen 18 der Basisstruktur 16 in unmittelbarer Nähe zu jenem stirnseitigen Ende (ohne Bezugszeichen) des Rahmens 18 angeordnet, an dem die erste Anlegeeinrichtung 36 angeordnet ist.

Analog zu der ersten Anlegeeinrichtung 36 ist auch bei der vorliegenden dritten Anlegeeinrichtung 58 deren vertikale Position relativ zu der Basisstruktur 16 veränderbar, indem die Kolbenstange 56 entsprechend dem Doppelpfeil 60 mehr oder weniger ausgefahren bzw. eingefahren wird. In Figur 2 ist die Kolbenstange 56 nur gestrichelt dargestellt, da sie sich in der dort gezeigten Betriebssituation in einer vollständig eingefahrenen Position befindet. Da die Kolbenstange 56 einen kreisrunden Querschnitt hat, handelt es sich wiederum um einen gekrümmten Anlegeabschnitt.

Wie aus den Figuren 1 und 2 ersichtlich ist, besitzen die zweite Anlegeeinrichtung 37 und die dritte Anlegeeinrichtung 58 eine Besonderheit: Sie bzw. deren Anlegeabschnitte 38 und 56 sind nämlich in horizontaler Richtung federnd gelagert, wie durch zwei kleine Pfeile 62 im Bereich der zweiten Anlegeeinrichtung 37 und der dritten Anlegeeinrichtung 58 angedeutet ist. Die Richtung der jeweiligen Pfeile 62 gibt die Richtung an, in der die jeweilige Anlegeeinrichtung 37 bzw. 58 federnd ausweichen kann. In weiteren nicht dargestellten Ausführungsformen ist auch die erste Anlegeeinrichtung 36 oder nur die erste Anlegeeinrichtung 36 oder nur die zweite Anlegeeinrichtung 37 oder nur die dritte Anlegeeinrichtung 58 federnd gelagert.

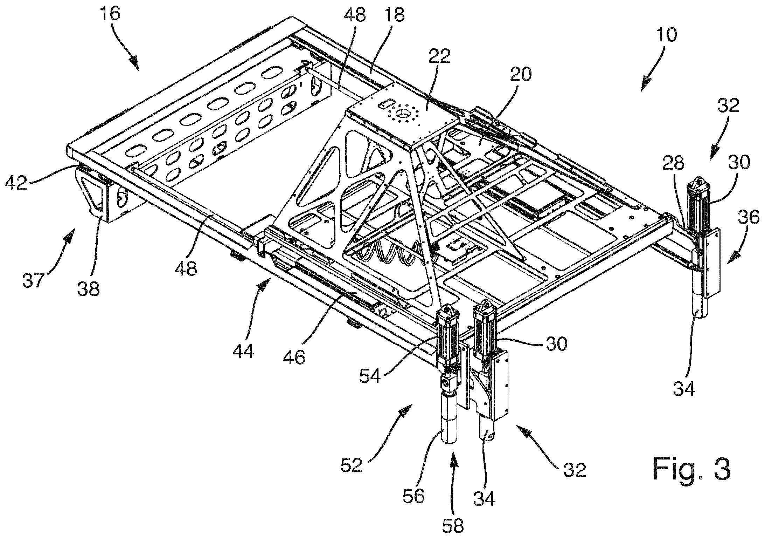

In Figur 3 sind die Basisstruktur 16, die erste Anlegeeinrichtung 36, die zweite Anlegeeinrichtung 37 und die dritte Anlegeeinrichtung 58 nochmals stärker im Detail dargestellt. Die entsprechenden Elemente und Bereiche tragen dort die gleichen Bezugszeichen wie in der schematischen Darstellung der Figuren 1 und 2.

In einer weiteren nicht dargestellten Ausführungsform umfasst die Handhabungseinrichtung 10 die erste Anlegeeinrichtung 36 und mindestens eine sich in horizontaler Ebene erstreckende Saugeinrichtung mit bevorzugt rechteckförmiger oder quadratischer Form, die unterhalb der Basisstruktur 16 angeordnet ist. Die mindestens eine Saugeinrichtung umfasst eine Mehrzahl von bevorzugt periodisch angeordneten Saugteileinrichtungen, die bevorzugt als Saugnäpfe oder Saugglocken ausgestaltet sind und die je nach Größe des Werkstückstapels 14 bzw. des einzelnen Werkstücks einzeln oder in Gruppen für einen Saugbetrieb eingeschaltet werden können. In einer bevorzugten Ausführungsform ist die Saugeinrichtung an einer Sekundärstützstruktur angeordnet, wobei die Sekundärstützstruktur an der Basisstruktur der Handhabungseinrichtung angeordnet ist. Bei einer solchen Ausführungsform sind die Halteabschnitte 28 der ersten Anlegeeinrichtung bevorzugt an der Sekundärstützstruktur der Saugeinrichtung angeordnet.

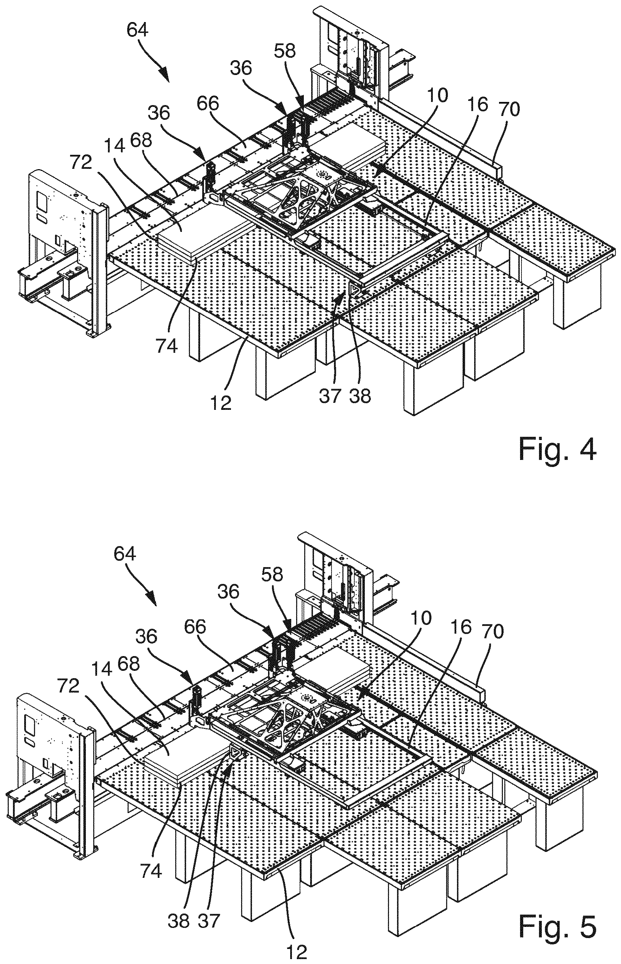

Nun wird unter Bezugnahme auf die Figuren 4-8 dargestellt, wie die Handhabungseinrichtung 10 betrieben werden kann. Wie aus den Figuren 4-8 ersichtlich ist, gehört die Handhabungseinrichtung 10 bei der vorliegenden Ausführungsform zu einer Werkstückbearbeitungsanlage, nämlich vorliegend zu einer Plattenaufteilanlage 64. Zu dieser gehört an sich ein Zuführtisch, der jedoch vorliegend nicht gezeichnet ist, sowie ein Programmschieber mit Spannzangen, mit dem auf dem Zuführtisch liegende plattenförmige Werkstücke bzw. Werkstückstapel bewegt werden können. Auch der Programmschieber und die Spannzangen sind vorliegend nicht dargestellt.

In einem weiteren nicht dargestellten Ausführungsbeispiel umfasst die Plattenaufteilanlage eine Steuerungseinrichtung für eine vollautomatische Steuerung der Plattenaufteilanlage, wobei die Steuerungseinrichtung bevorzugt mindestens einen Prozessor, mindestens ein Speichermodul und mindestens ein Steuerungssoftwareprogramm umfasst. Das mindestens eine Steuerungssoftwareprogramm ist bevorzugt auf dem mindestens einen Speichermodul gespeichert und wird bevorzugt von dem mindestens einen Prozessor ausgeführt um gewisse oder alle Arbeitsschritte der Plattenaufteilanlage zu steuern.

Gezeichnet ist in den Figuren 4-8 jedoch ein sich an den Zuführtisch anschließender Maschinentisch 66, der wiederum einen Sägespalt 68 aufweist. Unterhalb von dem Maschinentisch 66 ist ein in den Figuren nicht sichtbarer Sägewagen vorhanden, der eine Hauptsäge und eine Vorritzsäge tragen kann, die vorliegend jeweils als Kreissäge ausgebildet sind. Die Sägeblätter von Hauptsäge und Vorritzsäge können durch den Sägespalt 68 nach oben über das Niveau des Maschinentisches 66 heraus bewegt werden, und die Hauptsäge und die Vorritzsäge können mittels des Sägewagens längs zu dem Sägespalt 68 bewegt werden.

Hierdurch kann ein auf dem Maschinentisch 66 liegendes bzw. durch den Programmschieber relativ zu dem Sägespalt 68 positioniertes Werkstück bzw. ein Werkstückstapel aufgeteilt werden. Zu diesem Zweck ist üblicherweise auch noch ein Druckbalken vorhanden, der ebenfalls nicht gezeichnet ist. Ein solcher Druckbalken wäre oberhalb von dem Maschinentisch 66 angeordnet und könnte während des Sägevorgangs auf das auf dem Maschinentisch 66 liegende Werkstück bzw. den dort liegenden Werkstückstapel abgesenkt werden, wodurch dieser zwischen dem Druckbalken und dem Maschinentisch 66 sicher festgelegt werden würde.

An den Maschinentisch 66 schließt sich auf dessen vom Zuführtisch abgewandten Seite vorliegend ein Entnahmetisch 12 (siehe auch Figur 2) an, der vorliegend aus mehreren nebeneinander angeordneten Segmenten (ohne Bezugszeichen) besteht, und der als Luftkissentisch ausgebildet ist und einen Auflagetisch für den Werkstückstapel 14 bildet. Seitlich von dem Entnahmetisch 12 und vom Maschinentisch 66 ist ein Winkellineal 70 vorhanden, welches sich exakt orthogonal zum Sägespalt 68 erstreckt.

Der Entnahmetisch 12 umfasst bevorzugt eine Auflagefläche, die sich entlang des kompletten Sägespalts 68 und weiter bevorzugt darüber hinaus erstreckt und sich quer dazu vom Maschinentisch entlang des kompletten Winkellineals und weiter bevorzugt darüber hinaus erstreckt. Die Auflagefläche des Entnahmetisches 12 ist dadurch um 20, 30 oder 50 % größer als die maximalen Flächenmaße eines zu bearbeitenden Werkstücks bzw. Werkstückstapels 14 und kann dadurch auch als Zwischenlager im Seitenbereich des Entnahmetisches 12 dienen. Aufgrund der Handhabungseinrichtung 10 kann auf die sonst übliche Segmentierung des Entnahmetischens mit Zwischengängen für eine Bedienperson verzichtet werden.

Das Winkellineal 70 ist in Fig. 4 als stationäre Anlegeeinrichtung mit einem kontinuierlichen Anschlagsbereich dargestellt. In einer weiteren nicht dargestellten Ausführungsform besteht das Winkellineal aus einzelnen Segmenten mit einem diskontinuierlichen Anschlagsbereich. Die einzelnen Segmente sind bevorzugt zylinderförmige oder quaderförmige Anschlagsstifte, die vorzugsweise vertikal beweglich sind.

In einem weiteren bevorzugten Ausführungsbeispiel ist das Winkellineal ein höhenverstellbares Winkellineal. In einem solchen Fall ist die Plattenaufteilanlage 64 bevorzugt dazu eingerichtet, eine maximale Höhe des Winkellineals in Bezug auf eine Auflagefläche des mindestens einen Werkstücks bzw. des Werkstückstapels an die Höhe des mindestens einen Werkstücks 14 bzw. des Werkstückstapels und/oder an eine momentane Position der Handhabungseinrichtung 10 insbesondere einen vertikalen Abstand zwischen der Handhabungseinrichtung 10 und der Auflagefläche anzupassen.

Figur 4 zeigt einen ersten Zeitpunkt des Betriebs der Handhabungseinrichtung 10 bzw. der Plattenaufteilanlage 64. Ein durch einen Sägevorgang (Queraufteilung) abgetrennter Werkstückstapel 14 (siehe auch Figur 2) liegt auf dem Entnahmetisch 12, der insoweit den bereits oben im Zusammenhang mit Figur 2 erwähnten Auflagetisch bildet. Alternativ kann es sich anstelle des Werkstückstapels 14 auch um ein einzelnes Werkstück handeln. Mittels des Roboterarms 26 wird die Basisstruktur 16 oberhalb von dem Werkstückstapel 14 positioniert. Die beiden Kolbenstangen bzw. Anlegeabschnitte 34 der ersten Anlegeeinrichtung 36 sind vertikal nach unten ausgefahren, wie in Figur 2 dargestellt, wohingegen die Kolbenstange bzw. der Anlegeabschnitt 56 der dritten Anlegeeinrichtung 58 vollständig eingefahren ist, wie ebenfalls in Figur 2 dargestellt ist. Der Schieber 38 der zweiten Anlegeeinrichtung 37 ist in einer hinteren Position, wie ebenfalls in Figur 2 dargestellt ist.

Die Basisstruktur 16 wird nun mittels des Roboterarms 26 so positioniert, dass sich die beiden Anlegeabschnitte 34 der ersten Anlegeeinrichtung 36 in horizontaler Richtung gesehen in der Nähe eines ersten seitlichen Rands 72 des Werkstückstapels 14 befinden, und in vertikaler Richtung gesehen neben diesem ersten seitlichen Rand 72 angeordnet sind. Der erste seitliche Rand 72 des Werkstückstapels 14 ist vorliegend jener, der in Figur 4 dem Sägespalt 68 bzw. dem Maschinentisch 66 zugewandt ist.

Nun wird der pneumatische Antrieb 44 der zweiten Anlegeeinrichtung 37 so angesteuert, dass sich der Schieber 38 in Richtung zum Werkstückstapel 14 bewegt, bis er an einem zweiten seitlichen Rand 74 des Werkstückstapels 14 in Anlage kommt, wobei der zweite seitliche Rand 74 entgegengesetzt und wenigstens im Wesentlichen parallel zu dem ersten seitlichen Rand 72 des Werkstückstapels 14 angeordnet ist. Auf diese Weise wird der Abstand zwischen der ersten Anlegeeinrichtung 36 und der zweiten Anlegeeinrichtung 37 so verändert, dass der auf dem Entnahmetisch 12 liegende Werkstückstapel 14 zwischen der ersten Anlegeeinrichtung 36 und der zweiten Anlegeeinrichtung 37 verklemmt ist. Dieser Zeitpunkt des Betriebs der Handhabungseinrichtung 10 ist in Figur 5 gezeichnet.

In einer ersten alternativen Ausführungsform wird eine Handhabungseinrichtung 10 verwendet, die nur die erste Anlegeeinrichtung 36 und die zweite Anlegeeinrichtung 37 ohne die Fachwerkkonstruktion 20 umfasst und damit eine möglichst geringe vertikale Ausdehnung hat, um Kollisionen mit dem Druckbalken zu vermeiden.

In einer zweiten alternativen Ausführungsform unter Verwendung der Handhabungseinrichtung 10 mit der ersten Anlegeeinrichtung 36 und der mindestens einen Saugeinrichtung wird die Basisstruktur 16 der Handhabungseinrichtung 10 zunächst mittels des Roboterarms 26 über dem einzelnen Werkstück positioniert, dann soweit abgesenkt, bis die Saugnäpfe der mindestens einen Saugeinrichtung die Oberfläche des Werkstücks berühren und anschließend die mindestens eine Saugeinrichtung eingeschaltet oder die Saugleistung der Saugeinrichtung erhöht, so dass die Saugnäpfe das Werkstück mit einem vordefinierten Unterdruck ansaugen. In einer bevorzugten Ausführungsform wird die Saugeinrichtung mit einem ersten vordefinierten Unterdruck und mit einem zweiten vordefinierten Unterdruck in Bezug auf ein vordefiniertes Werkstückgewicht und ferner bevorzugt in Bezug auf eine Oberflächenrauigkeit des Werkstücks zu betrieben. Der erste vordefinierte Unterdruck reicht dabei aus, um das Werkstück trotz des Eigengewichts des Werkstücks anheben zu können. Der zweite vordefinierte Unterdruck reicht dabei aus, um das Werkstück schiebend über den Entnahmetisch zu bewegen. Dabei ist der zweite vordefinierte Unterdruck bevorzugt kleiner als der erste vordefinierte Unterdruck.

In einem weiteren Ausführungsbeispiel umfasst die Handhabungseinrichtung 10 eine Positionserkennungseinrichtung bevorzugt als Teil der Steuerungseinrichtung der Plattenaufteilanlage oder der Handhabungseinrichtung insbesondere für das Erfassen einer insbesondere relativen Position zwischen dem auf dem Auflagetisch liegenden Werkstück bzw. Werkstückstapel 14 und der Handhabungseinrichtung 10. Dazu umfasst die Handhabungseinrichtung 10 mindestens einen Positionssensor für den Werkstückstapel 14 bzw. das einzelne Werkstück, um die Basisstruktur 16 möglichst optimal über dem Werkstückstapel 14 bzw. dem einzelnen Werkstück zu positionieren. Optimal bedeutet dabei beispielsweise, dass der Werkstückstapel 14 bzw. das einzelne Werkstück sich beim Absenken der Basisstruktur 16 möglichst mittig zwischen der ersten und zweiten Anlegeeinrichtung 36, 37 befindet bzw. die für eine Ansaugung des Werkstückstapels 14 bzw. des Werkstücks vordefinierten Saugnäpfe der Saugeinrichtung beim Absenken der Handhabungseinrichtung 10 auch tatsächlich mit der Oberfläche des Werkstückstapels 14 bzw. des Werkstücks in Berührung kommen.

Der Positionssensor ist bevorzugt ein optischer Sensor wie beispielsweise ein fotoelektrischer Sensor, ein Lasersensor oder eine CCD-Kamera, der die Messsignale an die Steuerungseinrichtung der Plattenaufteilanlage oder an eine separate Steuerungseinrichtung der Handhabungseinrichtung 10 sendet, so dass die jeweilige Steuerungseinrichtung aus den Messsignalen einen Abstand zwischen der Saugeinrichtung bzw. den Saugeinrichtungen und dem Werkstück ermitteln kann und entsprechende Steuerungsbefehle für die Antriebe des Roboterarms 26 ableitet. In alternativen Ausführungsbeispielen ist der Positionssensor ein elektromagnetischer, mechanischer oder akustischer Sensor.

Der Positionssensor ist bevorzugt an einem unteren Bereich des Rahmens 18 derart angeordnet, dass der Positionssensor einen solchen Bereich der Auflagefläche erfasst, der sich vertikal unterhalb der Basisstruktur 16 befindet und sich bevorzugt um einige Zentimeter bis zu einem halben Meter über die horizontale Ausdehnung der Basisstruktur 16 hinaus erstreckt.

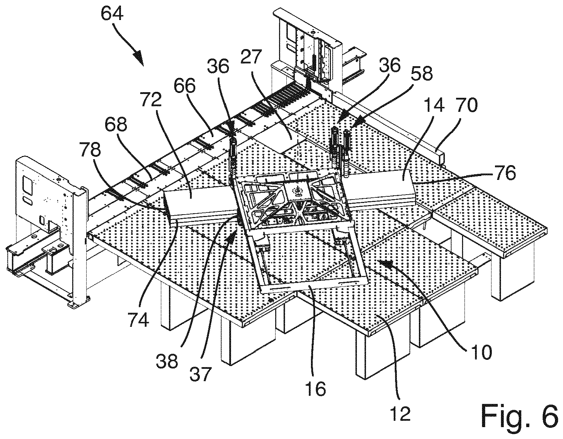

Als nächstes wird die oben beschriebene Dreheinrichtung angesteuert, wodurch die Basisstruktur und mit ihr der zwischen der ersten Anlegeeinrichtung 36 und der zweiten Anlegeeinrichtung 37 verklemmte Werkzeugstapel 14, der weiterhin auf dem Entnahmetisch 12 liegt, um die oben erwähnte vertikale Achse 27 um 90° gedreht wird. Figur 6 zeigt einen Zeitpunkt des Betriebs der Handhabungseinrichtung 10 während dieses Drehvorgangs. Alternativ kann ein solcher Drehvorgang ausgeführt werden, wenn ein einzelnes Werkstück entsprechend verklemmt ist oder ein einzelnes Werkstück mittels der mindestens einen Saugeinrichtung an der Handhabungseinrichtung 10 festgelegt ist.

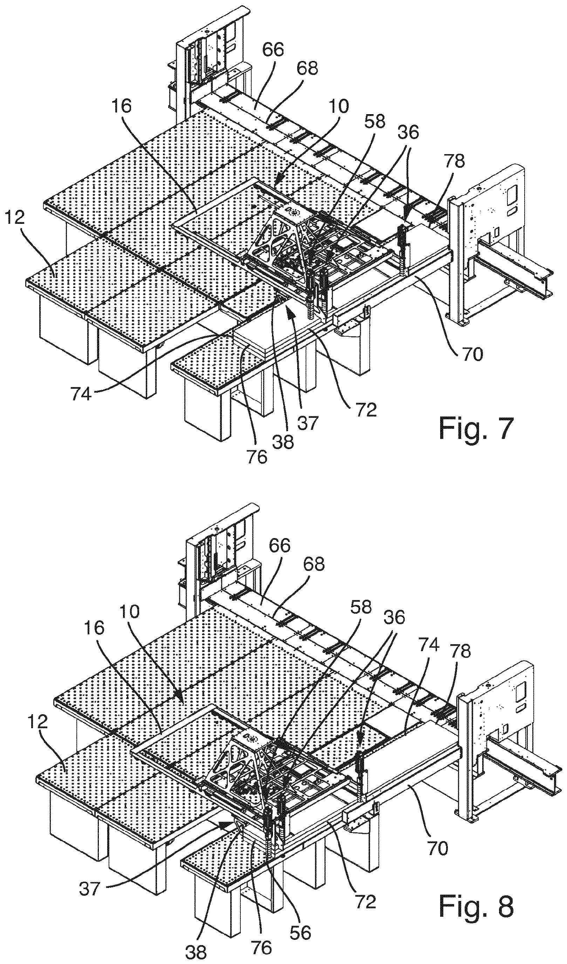

Nach der abgeschlossenen Drehung werden die Anlegeabschnitte 34 der ersten Anlegeeinrichtung 36 nach oben gefahren, und der Werkstückstapel 14 wird durch eine entsprechende Bewegung des Roboterarms 26 bzw. der Basisstruktur 16 mittels des weiterhin an dem zweiten seitlichen Rand 74 des Werkstückstapels 14 anliegenden Schiebers 38 zu dem Winkellineal 70 hingeschoben, bis der Werkstückstapel 14 mit dem ersten seitlichen Rand 72 am Winkellineal 70 anliegt. Durch die federnde Lagerung (Pfeile 62 in Figur 2) des Schiebers 38 wird zum einen eine Beschädigung der seitlichen Ränder 72 und 74 vermieden, und zum anderen wird eine vollständig parallele Ausrichtung des ersten seitlichen Rands 72 zum Winkellineal 70 mit einer definierten Kraft ermöglicht. Dieser Zeitpunkt des Betriebs der Handhabungseinrichtung 10 ist in Figur 7 dargestellt. Möglich ist ebenfalls, jedoch nicht dargestellt, eine Ausrichtung des Werkstückstapels 14 mittels der ersten Anlegeeinrichtung 36 oder, insbesondere bei kleineren Werkstücken, mittels der dritten Anlegeeinrichtung 58 und den angrenzenden Anlegeabschnitten 34 der ersten Anlegeeinrichtung 36.

In einer alternativen Ausführungsform wird wie folgt vorgegangen: Nach der abgeschlossenen Drehung wird das mittels der mindestens einen Saugeinrichtung angesaugte Werkstück grob am Ort des Winkellineals 70 positioniert. Grob bedeutet, dass der Abstand zwischen dem Werkstück und dem Winkellineal wenige Millimeter bis zu wenigen Zentimetern, bevorzugt 1 bis 2 Zentimeter, beträgt. Bevorzugt wird das Werkstück auch soweit in Richtung des Sägespalts positioniert, dass die Spannzangen zumindest eines Programmschiebers das Werkstück greifen können.

Falls, wie oben bereits als Alternative beschrieben, ein versenkbares Winkellineal 70 verwendet wird, so wird dieses Winkellineal 70 nun vertikal nach oben über die Auflagefläche des Entnahmetisches 12 bewegt. Die Ausfahrhöhe des Winkellineals kann dabei bevorzugt an die Dicke des Werkstücks und/oder die aktuelle Position der Handhabungseinrichtung angepasst sein. Die Dicke des Werkstücks bzw. die aktuelle Position der Handhabungseinrichtung sind der Steuerungseinrichtung der Plattenaufteilanlage aufgrund bekannter Abmessungen des Werkstücks bzw. der Handhabungseinrichtung und bekannter Stellungen aller Gelenk- und Drehvorrichtungen des Roboterarms 26 bekannt.

Weiter bevorzugt hat das Winkellineal dabei die gleiche Höhe wie das Werkstück oder ragt um ein bis drei Zentimeter über das Niveau der Oberfläche des Werkstücks hinaus. Die an die Werkstückdicke und die Position der Handhabungseinrichtung angepasste Ausfahrhöhe des Winkellineals soll insbesondere Kollisionen zwischen dem Winkellineal und der Handhabungseinrichtung 10 vermeiden. Nun wird die mindestens eine Saugeinrichtung ausgeschaltet oder die Saugleistung wird um bevorzugt 75 bis 95 % vermindert, so dass das Werkstück freigegeben wird, und die Handhabungseinrichtung 10 wird bevorzugt um wenige Millimeter bis zu einem Zentimeter oder bis zu drei Zentimeter angehoben. Auf eine Anhebung der Handhabungseinrichtung 10 kann alternativ verzichtet werden, wenn der Freiraum zwischen der Oberfläche des Werkstücks und der Unterseite der Saugnäpfe nach Ausschalten der mindestens einen Saugeinrichtung mindestens ein bis drei und bevorzugt mindestens 5 Millimeter beträgt.

Die Freigabe des Werkstücks wird bevorzugt mittels einer weiteren Funktion der Positionserkennungseinrichtung überwacht, die dafür zumindest aus einem Sensor und einem Steuerungsmodul besteht, wobei das Steuerungsmodul bevorzugt ein Softwaremodul ist. Diese Überwachung kann mittels des oben erwähnten Positionssensors über eine Abstandsmessung oder mittels mindestens eines Kontaktsensors der Handhabungseinrichtung 10 über eine Kontaktmessung oder mittels mindestens eines Gasdrucksensors erfolgen, wobei der mindestens eine Gasdrucksensor bevorzugt in mindestens einer Saugteileinrichtung oder deren Zuleitung zu einer Vakuumeinheit integriert ist. Als Kontaktsensoren können kapazitive Sensoren, piezoelektrische Sensoren oder optische Sensoren eingesetzt werden, die bevorzugt in die Kontaktflächen Sauteileinrichtungen integriert sind.

Gemäß einer weiteren bevorzugten Funktionalität ist die Positionserkennungseinrichtung dazu eingerichtet zu überwachen, ob vor dem in Anlage bringen der mindestens einen Anlegeeinrichtung 36 an den seitlichen Rand des Werkstücks oder des Werkstückstapels 14 zumindest ein Seitenrand des Werkstücks oder des Werkstückstapels 14 bei Annäherung der Handhabungseinrichtung 10 an das Werkstück bzw. den Werkstückstapel 14 einen vordefinierten horizontalen Abstand zu der mindestens einen Anlegeeinrichtung 36 erreicht hat oder ob vor dem Ansaugen des Werkstücks mittels der Saugeinrichtung bzw. der Saugeinrichtungen alle für das Ansaugen vordefinierten Saugeinrichtungen sich vollständig vertikal über der Oberfläche des Werkstücks befinden.

Alternativ können die verschiedenen Funktionalitäten der Positionserkennungseinrichtung auch durch separate Positionserkennungseinrichtungen realisiert werden.

Die Handhabungseinrichtung 10 wird im nächsten Schritt bevorzugt erst dann horizontal verfahren, wenn die jeweilige Steuerungseinrichtung eine Freigabe des Werkstücks festgestellt hat. Dadurch werden Kratzspuren oder sonstige Beschädigungen der Oberfläche des Werkstücks durch die Saugnäpfe vermieden. Die Handhabungseinrichtung 10 wird dabei soweit horizontal verfahren, bis die erste Anlegeeinrichtung 36 sich außerhalb eines solchen Randbereichs des Werkstücks befindet, der jenem Randbereich des Werkstücks, der parallel zum Winkellineal 70 verläuft und dem Winkellineal 70 am nächsten ist, entgegengesetzt ist. Anschließend werden die Anlegeabschnitte der ersten Anlegeeinrichtung 36 vertikal nach unten verfahren. Dabei ist der vertikale Verfahrweg der Anlegeabschnitte bevorzugt an die Dicke des Werkstücks soweit angepasst, dass die Anlegeabschnitte mit bevorzugt mindestens 50 % der vertikalen Höhe des Werkstücks in Kontakt gebracht werden können.

Weiter bevorzugt werden die Anlegeabschnitte soweit nach unten ausgefahren, dass die Anlegeabschnitte einen vertikalen Abstand zur Auflagefläche des Entnahmetisches 12 von mindestens 1 bis 3 mm haben. Dazu können bevorzugt Abstandssensoren in den Kolbenstangen 34 derart integriert sein, dass der Überwachungsbereich der Abstandssensoren nach unten zur Auflagefläche des Entnahmetisches 12 weist. Über diese Abstandssensoren kann das korrekte Ausfahren der Anlegeabschnitte kontrolliert werden.

Die Anlegeeinrichtung 36 wird im nächsten Schritt bevorzugt erst dann horizontal in Richtung des Werkstücks verfahren, wenn die jeweilige Steuerungseinrichtung eine korrekte Ausfahrhöhe der Kolbenstangen 34 bzw. der Anlegeabschnitte festgestellt hat. Dadurch werden Berührungen der Anlegeeinrichtung 36 mit dem Entnahmetisch 12 vermieden. Durch das horizontale Verfahren der Anlegeeinrichtung 36 kommen die Anlegeabschnitte der Anlegeeinrichtung 36 mit dem betreffenden Rand des Werkstücks in Berührung und drücken das Werkstück schließlich gegen das Winkellineal 70, so dass das Werkstück ausgerichtet ist.

Ein vordefinierter Anpressdruck wird dazu bevorzugt entweder über die federnde Lagerung der Anlegeeinrichtung 36 und eine vordefinierten zusätzlichen horizontalen Verfahrweg aufgebaut, der die Federn entsprechend zusammendrückt oder die Anlegeabschnitte umfassen bevorzugt jeweils mindestens einen Drucksensor, um den Anpressdruck zu messen und entsprechend über die jeweilige Steuerungseinrichtung und einen zusätzlichen horizontalen Verfahrweg einzuregulieren. Als Drucksensoren können beispielsweise kapazitive, induktive, piezoresistive, piezoelektrische oder frequenzanaloge Drucksensoren Verwendung finden.

Nun wird der Schieber 38 etwas zurückgefahren, wodurch der Werkstückstapel 14 zunächst freigegeben wird. Mittels des Roboterarms 26 wird die Basisstruktur 16 parallel zur Längserstreckung des Werkstückstapels 14 in Figur 8 nach links vom Maschinentisch 66 wegbewegt, und dann wird der Anlegeabschnitt 56 der dritten Anlegeeinrichtung 58 nach unten gefahren. Die Positionierung der Basisstruktur 16 ist dabei so, dass der Anlegeabschnitt 56 der dritten Anlegeeinrichtung 58 zunächst in horizontaler Richtung gesehen in einem geringen Abstand von einem dritten seitlichen Rand 76 des Werkstückstapels 14 angeordnet ist, wobei der dritte seitliche Rand 76 orthogonal zu dem ersten seitlichen Rand 72 und auch zu dem zweiten seitlichen Rand 74 ausgerichtet ist, nämlich die in Figur 8 hintere und vom Maschinentisch 66 abgewandte Stirnseite des Werkstückstapels 14 bildet. Dieser Zeitpunkt des Betriebs der Handhabungseinrichtung 10 ist in Figur 8 gezeigt.

Die Basisstruktur 16 wird nun parallel zum Winkellineal 70 in Richtung zum Maschinentisch 66 bewegt, wodurch der Anlegeabschnitt 56 der dritten Anlegeeinrichtung 58 in Anlage an den dritten seitlichen Rand 76 des Werkstückstapels 14 gebracht wird. Die Basisstruktur 16 wird weiterhin parallel zum Winkellineal 70 in Richtung zum Maschinentisch 66 hin bewegt, so dass der Werkstückstapel 14 nun parallel zum Winkellineal 70 in Richtung zum Maschinentisch bewegt wird. Während dieses Vorgangs kann der Schieber 38 der zweiten Anlegeeinrichtung den Werkstückstapel 34 leicht gegen das Winkellineal beaufschlagen, um sicherzustellen, dass der Werkstückstapel 34 während der Bewegung am Winkellineal 70 ausgerichtet bleibt.

Auf diese Weise kann ein vierter seitlicher Rand 78 des Werkstückstapels 14, der zu dem dritten seitlichen Rand 76 entgegengesetzt ist und vorliegend die in Bezug auf den Maschinentisch 66 vordere Stirnseite des Werkstückstapels 14 bildet, in Richtung zu Spannzangen des oben erwähnten aber in den Figuren nicht gezeichneten Programmschiebers bewegt werden, bis dieser vierte seitliche Rand 78 in Anlage an einen Spannzangengrund dieser Spannzangen gelangt.

Dabei wird eine Beschädigung des dritten seitlichen Rands 76 des Werkstückstapels 14 durch die federnde Lagerung des Anlegeabschnitts 56 der dritten Anlegeeinrichtung 58 (kleine Pfeile 62 in Figur 1) verhindert. Sobald der vierte seitliche Rand 78 am Spannzangengrund der Spannzangen anliegt, werden die Spannzangen geschlossen, und die Handhabungseinrichtung 10 wird von dem Werkstückstapel 14 wegbewegt. Durch eine Bewegung des Programmschiebers kann nun der Werkstückstapel 14 auf den Zuführtisch gezogen und von dort einem weiteren Aufteilvorgang (Längsaufteilung) zugeführt werden.

Unter Verwendung der oben erwähnten ersten alternativen Ausführungsform der Handhabungseinrichtung 10 kann auf eine solche Zustellung des Werkstückstapels 14 zum Programmschieber verzichtet werden, wenn wie oben beschrieben, der Werkstückstapel bei der Positionierung am Winkellineal 70 soweit in Richtung des Sägespalts positioniert wird, dass die Spannzangen zumindest eines Programmschiebers den Werkstückstapel 14 greifen können. Ebenso kann auf eine solche Zustellung des Werkstücks zum Programmschieber bei der oben erwähnten zweiten alternativen Ausführungsform der Handhabungseinrichtung 10 verzichtet werden, wenn wie oben beschrieben, das Werkstück bei der Positionierung am Winkellineal 70 soweit in Richtung des Sägespalts positioniert wird, dass die Spannzangen zumindest eines Programmschiebers das Werkstück greifen können.

Oben wurden beispielhaft pneumatische Antriebe für die Anlegeeinrichtung 36, 38 und 58 beschrieben. Es versteht sich, dass bei anderen nicht gezeigten Ausführungsformen auch andere Antriebe zum Einsatz kommen können, beispielsweise elektrische Antriebe, und es ist auch möglich, dass eine Anlegeeinrichtung einen pneumatischen Antrieb und eine andere Anlegeeinrichtung einen elektrischen Antrieb hat.

Ferner haben bei dem dargestellten Ausführungsbeispiel die Anlegeabschnitte 34 der ersten Anlegeeinrichtung 36 und der Anlegeabschnitt 56 der dritten Anlegeeinrichtung 58 jeweils eine gekrümmte Form. Möglich sind grundsätzlich auch gerade Anlegeabschnitte. Darüber hinaus können einzelne oder sämtliche Anlegeabschnitte mit einem elastischen Material beschichtet sein, um die Gefahr von Beschädigungen der seitlichen Ränder 72 bis 78 des Werkstückstapels 14 noch weiter zu reduzieren.

Die durch die kleinen Pfeile 62 angedeutete federnde Lagerung des Schiebers 38 der zweiten Anlegeeinrichtung 37 und des Anlegeabschnitts 56 der dritten Anlegeeinrichtung 58 kann beispielsweise durch eine pneumatische Federung oder durch eine mechanische Feder realisiert werden. In der gleichen Art kann die federnde Lagerung der ersten Anlegeeinrichtung 36 ausgestaltet sein.

Bei der dargestellten Ausführungsform war spezifisch die Handhabung eines Werkstückstapels 14 bestehend aus einer Mehrzahl von plattenförmigen Werkstücken beschrieben worden. Grundsätzlich denkbar ist aber die Anwendung des obigen Verfahrens und der oben beschriebenen Handhabungseinrichtung 10 auch bei anderen Werkstücken, die nicht zwingend plattenförmig sind, sowie auch bei einzelnen Werkstücken, die nicht gestapelt sind, wie es bereits oben in Bezug auf einige Ausführungsbeispiele beschrieben ist. Auch kann das obige Verfahren bzw. die oben beschriebene Handhabungseinrichtung 10 bei ganz anderen Plattenaufteilanlagen zum Einsatz kommen, bei denen also keine Sägeeinrichtung, sondern eine andere Art der Werkstückbearbeitung vorgesehen ist.

Oben war erwähnt worden, dass die Anschlussplatte 24 einen Schnellwechsler bildet, welcher die Verbindung unterschiedlicher Einrichtungen an dem Roboterarm 26 gestattet. Beispielsweise kann anstelle der Basisstruktur 16 mit den Anlegeeinrichtungen 36, 37 und 58 auch eine sogenannte Saugtraverse an der Anschlussplatte 24 befestigt werden, welche eine Vielzahl von Saugglocken umfasst, die an einer Oberseite eines Werkstücks angreifen können.

Schließlich ist - analog zu einigen bereits oben beschriebenen Ausführungsbeispielen - noch grundsätzlich denkbar, dass die oben beschriebenen Anlegeeinrichtungen 36, 37 und 58 mit einer Saugeinrichtung, beispielsweise einer Saugtraverse mit einer Mehrzahl von Saugglocken, kombiniert werden, und dass die Saugglocken dann, wenn die Anlegeeinrichtungen 36, 37 und 58 betrieben werden, ausgeschaltet sind oder mit stark reduzierter Saugleistung betrieben wird, insbesondere mit einer auf 5 - 25 % reduzierten Saugleistung gegenüber einer beim Greifen des Werkstücks mittels der Saugeinrichtung verwendeten Saugleistung, und die Basisstruktur 16 so positioniert wird, dass die Saugglocken von einer Oberseite des Werkstücks bzw. Werkstückstapels beabstandet sind. Denkbar ist aber auch, dass die Saugeinrichtung unterstützend bei der Handhabung eines Werkstücks oder einer Mehrzahl von Werkstücken mittels der Anlegeeinrichtungen eingesetzt wird.

Die Saugeinrichtung kann bzw. die Saugeinrichtungen können beispielsweise aus mehreren den oben erwähnten Saugglocken bzw. Vakuumsauggreifern, die an dem Werkstück angreifen. Alternativ kann die Saugeinrichtung bzw. können die Saugeinrichtungen aus einem einteiligen luftdurchlässigen Material, insbesondere einem Dichtschaum, bestehen, dass bei sogenannten Flächengreifsystemen eingesetzt wird und dass an dem Werkstück angreift.

Grundsätzlich kann ferner die oben beschriebene Handhabungseinrichtung 10 auch dazu verwendet werden, ein durch die Plattenaufteilanlage fertig bearbeitetes Werkstück bzw. einen durch die Plattenaufteilanlage fertig bearbeitete von dem Auflagetisch bzw. Entnahmetisch auf eine in den obigen Figuren nicht gezeichnete Auslaufrollenbahn zu schieben, von wo sie dann von weiteren Einrichtungen weitertransportiert oder von einer Bedienperson entnommen werden können.

Auch kann die oben beschriebene Handhabungseinrichtung 10 dazu verwendet werden, lediglich die Drehung des Werkstücks bzw. des Werkstückstapels zu vollziehen, so dass das gedrehte Werkstück bzw. der gedrehte Werkstückstapel anschließend von einer Bedienperson manuell gehandhabt werden kann.

Auch wurde oben konkret eine Ausführungsform einer Handhabungseinrichtung 10 beschrieben, bei der insgesamt drei Anlegeeinrichtungen 36, 37 und 58 vorhanden sind. Es versteht sich, dass grundsätzlich auch bei einer Handhabungseinrichtung, welche wie oben bei einigen Ausführungsbeispielen beschrieben nur eine erste Anlegeeinrichtung oder eine erste und eine zweite Anlegeeinrichtung aufweist, bereits erheblich Vorteile erzielt werden können.

## Patentansprüche

1. Plattenaufteilanlage (64) umfassend eine Handhabungseinrichtung (10) zum Handhaben mindestens eines auf einem Auflagetisch (12) liegenden Werkstücks (14), vorzugsweise eines Stapels von vorzugsweise plattenförmigen Werkstücken, wobei die Handhabungseinrichtung (10) eine oberhalb von dem mindestens einen Werkstück (14) anordenbare Basisstruktur (16) mit einem Verbindungsabschnitt zur Verbindung mit einer maschinell betreibbaren Bewegungseinrichtung, insbesondere einem Roboter, durch welche die Basisstruktur (16) bewegt werden kann, und einer Mehrzahl von Saugeinrichtungen für ein Angreifen an einer Materialoberfläche des mindestens einen Werkstücks (14) umfasst, wobei an der Basisstruktur (16) mindestens eine sich wenigstens zeitweise nach unten erstreckende erste Anlegeeinrichtung (36) angebracht ist, wobei die Plattenaufteilanlage (64) ausgebildet ist, um die erste Anlegeeinrichtung (36) an einem ersten seitlichen Rand (72) des mindestens einen auf dem Auflagetisch (12) liegenden Werkstücks (14) in Anlage zu bringen und so das mindestens eine auf dem Auflagetisch (12) liegende Werkstück (14) von der zumindest mehr oder weniger oberhalb von dem mindestens einen Werkstück (14) angeordneten Basisstruktur (16) mittels der nach unten abragenden Anlegeeinrichtung (36) zu verschieben, **dadurch gekennzeichnet, dass** die Basisstruktur (16) um eine vertikale Achse, insbesondere mittels eines Antriebs, drehbar ist.

2. Plattenaufteilanlage (64) nach Anspruch 1, **dadurch gekennzeichnet, dass** eine vertikale Position eines Anlegeabschnitts (34) der ersten Anlegeeinrichtung (36) relativ zu der Basisstruktur (16) veränderbar ist und die Handhabungseinrichtung (10) insbesondere einen maschinellen, insbesondere pneumatischen Antrieb (32) für die Veränderung der vertikalen Position des Anlegeabschnitts (34) der ersten Anlegeeinrichtung (36) relativ zu der Basisstruktur (16) umfasst.

3. Plattenaufteilanlage (64) nach wenigstens einem der vorhergehenden Ansprüche, **dadurch gekennzeichnet, dass** die erste Anlegeeinrichtung (36) zwei voneinander beabstandete Anlegeabschnitte (34) umfasst.

4. Plattenaufteilanlage (64) nach wenigstens einem der vorhergehenden Ansprüche, **dadurch gekennzeichnet, dass** an der Basisstruktur (16) mindestens eine sich wenigstens zeitweise nach unten erstreckende zweite Anlegeeinrichtung (37) angebracht ist, die an einem zweiten seitlichen Rand (74) des mindestens einen auf dem Auflagetisch (12) liegenden Werkstücks (14) in Anlage gebracht werden kann, wobei der zweite seitliche Rand (74) entgegengesetzt und wenigstens im Wesentlichen parallel zu dem ersten seitlichen Rand (72) des mindestens einen Werkstücks (14) angeordnet ist, und dass insbesondere ein Anlegeabschnitt (34) der ersten Anlegeeinrichtung (36) und ein Anlegeabschnitt (38) der zweite Anlegeeinrichtung (37) so in einem veränderbaren Abstand voneinander angeordnet sind, dass das mindestens eine auf dem Auflagetisch (12) liegende Werkstück (14) zwischen dem Anlegeabschnitt (34) der ersten Anlegeeinrichtung (36) und dem Anlegeabschnitt (38) der zweiten Anlegeeinrichtung (37) verklemmt werden kann.

5. Plattenaufteilanlage (64) nach wenigstens einem der vorhergehenden Ansprüche, **dadurch gekennzeichnet, dass** an der Basisstruktur (16) mindestens eine sich wenigstens zeitweise nach unten erstreckende dritte Anlegeeinrichtung (58) angebracht ist, die an einem dritten seitlichen Rand (76) des mindestens einen auf dem Auflagetisch (12) liegenden Werkstücks (14) in Anlage gebracht werden kann, wobei der dritte seitliche Rand (76) wenigstens im Wesentlichen orthogonal zu dem ersten seitlichen Rand (72) und dem zweiten seitlichen Rand (74) angeordnet ist.

6. Plattenaufteilanlage (64) nach wenigstens einem der vorhergehenden Ansprüche, **dadurch gekennzeichnet, dass** sie eine Pneumatiksteuerung aufweist, mittels der die Saugeinrichtung mit einem ersten vordefinierten Unterdruck und einem zweiten vordefinierten Unterdruck betrieben werden kann, wobei die vordefinierten Unterdrücke vorzugsweise von einem Werkstückgewicht und insbesondere einer Rauigkeit der Werkstückoberfläche abhängen, und wobei der erste vordefinierte Unterdruck ausreicht, um das Werkstück anzuheben, und der zweite vordefinierte Unterdruck ausreicht, um das Werkstück schiebend über den Entnahmetisch zu bewegen.

7. Plattenaufteilanlage (64) nach wenigstens einem der vorhergehenden Ansprüche, **dadurch gekennzeichnet, dass** sie eine Positionserkennungseinrichtung umfasst, welche dazu eingerichtet ist zu überwachen, ob das Werkstück nach dem Ausschalten der Saugeinrichtung freigegeben ist, insbesondere, ob die Saugeinrichtung vom Werkstück beabstandet ist.

8. Plattenaufteilanlage (64) nach wenigstens einem der vorhergehenden Ansprüche, **dadurch gekennzeichnet, dass** sie eine weitere oder die Positionserkennungseinrichtung umfasst, welche dazu eingerichtet ist zu überwachen, ob vor dem Greifen des Werkstücks bzw. des Werkstückstapels durch die erste Anlegeeinrichtung und die zweite Anlegeeinrichtung zumindest ein Seitenrand des Werkstücks bzw. des Werkstückstapels bei Annäherung der Handhabungseinrichtung an das Werkstück bzw. den Werkstückstapel einen vordefinierten horizontalen Abstand zu der ersten Anlegeeinrichtung erreicht hat oder ob vor einem Ansaugen des Werkstücks durch die Saugeinrichtung alle für das Ansaugen vordefinierten Saugteileinrichtungen der Saugeinrichtung sich vollständig vertikal über der Oberfläche des Werkstücks befinden.

9. Plattenaufteilanlage (64) nach wenigstens einem der vorhergehenden Ansprüche, **dadurch gekennzeichnet, dass** sie eine weitere oder die Positionserkennungseinrichtung umfasst, welche dazu eingerichtet ist zu überwachen, dass ein vertikales unteres Ende der mindestens einen Anlegeeinrichtung bei Annäherung der Handhabungseinrichtung an das Werkstück bzw. den Werkstückstapel einen vordefinierten Abstand zur Auflagefläche des Werkstücks bzw. Werkstückstapels nicht unterschreitet.

10. Plattenaufteilanlage (64) nach wenigstens einem der vorhergehenden Ansprüche, **dadurch gekennzeichnet, dass** die Plattenaufteilanlage (64) ferner eine höhenverstellbare stationäre Anlegeeinrichtung, insbesondere ein höhenverstellbares Winkellineal, für die Ausrichtung des mindestens einen Werkstücks (14) bzw. des Werkstückstapels umfasst, und dass die Plattenaufteilanlage (64) dazu eingerichtet ist, eine vertikale Position, insbesondere eine maximale Höhe, des Winkellineals in Bezug auf eine Auflagefläche des mindestens einen Werkstücks bzw. des Werkstückstapels an die Höhe des mindestens einen Werkstücks (14) bzw. des Werkstückstapels und/oder an eine momentane Position der Handhabungseinrichtung (10) anzupassen.

11. Verfahren zum Betreiben einer Plattenaufteilanlage (64) **dadurch gekennzeichnet, dass** es sich um eine Plattenaufteilanlage (64) nach wenigstens einem der vorhergehenden Ansprüche handelt und dass das Verfahren die folgenden Schritte umfasst:
- Bewegen der Handhabungseinrichtung (10) über das mindestens eine auf dem Auflagetisch (12) liegende Werkstück (14) so, dass die erste Anlegeeinrichtung (36) an dem ersten seitlichen Rand (72) des mindestens einen auf dem Auflagetisch (12) liegenden Werkstücks (14) angeordnet ist, und
- Verschieben des mindestens einen auf dem Auflagetisch (12) liegenden Werkstücks (14) von der zumindest mehr oder weniger oberhalb von dem mindestens einen Werkstück (14) angeordneten Basisstruktur (16) mittels der nach unten abragenden Anlegeeinrichtung (36).

12. Verfahren nach Anspruch 11, **dadurch gekennzeichnet, dass** es ferner den folgenden Schritt umfasst: Beaufschlagen des mindestens einen auf dem Auflagetisch (12) liegenden Werkstücks (14) mittels der ersten Anlegeeinrichtung (36) gegen eine stationäre Anlegeeinrichtung, insbesondere gegen ein Winkellineal (70) der Plattenaufteilanlage.

13. Verfahren nach Anspruch 12, **dadurch gekennzeichnet, dass** es ferner die folgenden Schritte umfasst:
- Ansaugen des mindestens einen auf dem Auflagetisch (12) liegenden Werkstücks (14) mittels der Saugeinrichtung,
- Bewegen des mindestens einen auf dem Auflagetisch (12) liegenden Werkstücks (14) zu der stationären Anlegeeinrichtung, und
- Freigeben des mindestens einen auf dem Auflagetisch (12) liegenden Werkstücks (14) durch die mindestens eine Saugeinrichtung vor dem Beaufschlagen des mindestens einen auf dem Auflagetisch (12) liegenden Werkstücks (14) mittels der ersten Anlegeeinrichtung (36) gegen die stationäre Anlegeeinrichtung, vorzugsweise wobei das Freigeben des mindestens einen auf dem Auflagetisch (12) liegenden Werkstücks (14) durch die mindestens eine Saugeinrichtung von einer Positionserkennungseinrichtung überwacht wird.

14. Verfahren nach wenigstens einem der vorhergehenden Ansprüche 12 oder 13, **dadurch gekennzeichnet, dass** es ferner den folgenden Schritt umfasst:
- Beaufschlagen des mindestens einen auf dem Auflagetisch (12) liegenden Werkstücks (14) mittels der dritten Anlegeeinrichtung (58) gegen eine wenigstens zeitweise stationäre Anlegeeinrichtung, insbesondere gegen wenigstens eine Spannzange einer Fördereinrichtung der Plattenaufteilanlage (64).

## Claims

1. Panel dividing system (64) comprising a handling device (10) for handling at least one workpiece (14) lying on a support table (12), preferably a stack of preferably planar workpieces, the handling device (10) comprising a base structure (16) that can be arranged above the at least one workpiece (14) and comprises a connecting portion for connection to a machine-operable movement device, in particular a robot, by means of which the base structure (16) can be moved, and a plurality of suction devices for gripping a material surface of the at least one workpiece (14), at least one at least temporarily downwardly extending first contact device (36) being attached to the base structure (16), the panel dividing system (64) being designed to bring the first contact device (36) into contact with a first lateral edge (72) of the at least one workpiece (14) lying on the support table (12), and thus to shift the at least one workpiece (14) lying on the support table (12), by means of the downwardly protruding contact device (36), by the base structure (16) that is arranged at least more or less above the at least one workpiece (14), **characterized in that** the base structure (16) is rotatable about a vertical axis, in particular by means of a drive.

2. Panel dividing system (64) according to claim 1, **characterized in that** a vertical position of a contact portion (34) of the first contact device (36) relative to the base structure (16) can be changed, and the handling device (10) comprises in particular a mechanical, in particular pneumatic, drive (32) for changing the vertical position of the contact portion (34) of the first contact device (36) relative to the base structure (16) .

3. Panel dividing system (64) according to at least one of the preceding claims, **characterized in that** the first contact device (36) comprises two contact portions (34) that are at a distance from one another.

4. Panel dividing system (64) according to at least one of the preceding claims, **characterized in that** at least one second contact device (37) extending at least temporarily downward is attached to the base structure (16), which second contact device can be brought to bear against a second lateral edge (74) of the at least one the workpiece (14) lying on the support table (12), the second lateral edge (74) being arranged so as to be opposite and at least substantially parallel to the first lateral edge (72) of the at least one workpiece (14), and **in that** in particular a contact portion (34) of the first contact device (36) and a contact portion (38) of the second contact device (37) are arranged at a changeable distance from one another such that the at least one workpiece (14) lying on the support table (12) can be clamped between the contact portion (34) of the first contact device (36) and the contact portion (38) of the second contact device (37).

5. Panel dividing system (64) according to at least one of the preceding claims, **characterized in that** at least one third contact device (58) which extends at least temporarily downward is attached to the base structure (16), which third contact device can be brought to bear against a third lateral edge (76) of the at least one workpiece (14) lying on the support table (12), the third lateral edge (76) being arranged so as to be at least substantially orthogonal to the first lateral edge (72) and the second lateral edge (74).

6. Panel dividing system (64) according to at least one of the preceding claims, **characterized in that** said system has a pneumatic controller by means of which the suction device can be operated at a first predefined negative pressure and a second predefined negative pressure, the predefined negative pressures preferably being dependent on a workpiece weight and in particular a roughness of the workpiece surface, and the first predefined negative pressure being sufficient to lift the workpiece, and the second predefined negative pressure being sufficient to move the workpiece slidingly over the removal table.

7. Panel dividing system (64) according to at least one of the preceding claims, **characterized in that** said system comprises a position detecting device which is set up to monitor whether the workpiece is released after the suction device has been switched off, in particular whether the suction device is at a distance from the workpiece.

8. Panel dividing system (64) according to at least one of the preceding claims, **characterized in that** said system comprises a further or the position detecting device which is set up to monitor whether, before the workpiece or the workpiece stack is gripped by the first contact device and the second contact device, at least one side edge of the workpiece or the workpiece stack, as the handling device approaches the workpiece or the workpiece stack, has reached a predefined horizontal distance from the first contact device, or whether, before suction is applied to the workpiece by the suction device, all of the suction sub-devices of the suction device that are predefined for the suction are located completely vertically above the surface of the workpiece.

9. Panel dividing system (64) according to at least one of the preceding claims, **characterized in that** said system comprises a further or the position detecting device which is set up to monitor that a vertical lower end of the at least one contact device, as the handling device approaches the workpiece or the workpiece stack, does not fall below a predefined distance from the support surface of the workpiece or workpiece stack.

10. Panel dividing system (64) according to at least one of the preceding claims, **characterized in that** the panel dividing system (64) further comprises a height-adjustable stationary contact device, in particular a height-adjustable adjustable set square, for aligning the at least one workpiece (14) or the workpiece stack, and **in that** the panel dividing system (64) is designed to adjust a vertical position, in particular a maximum height, of the adjustable set square in relation to a support surface of the at least one workpiece or the workpiece stack to the height of the at least one workpiece (14) or the workpiece stack, and/or to a current position of the handling device (10).

11. Method for operating a panel dividing system (64), **characterized in that** said system is a panel dividing system (64) according to at least one of the preceding claims and **in that** the method comprises the following steps:
- moving the handling device (10) over the at least one workpiece (14) lying on the support table (12) such that the first contact device (36) is arranged on the first lateral edge (72) of the at least one workpiece (14) lying on the support table (12), and
- shifting, by means of the downwardly protruding contact device (36), the at least one workpiece (14) lying on the support table (12) by the base structure (16) that is arranged at least more or less above the at least one workpiece (14).

12. Method according to claim 11, **characterized in that** said method further comprises the following step: pressing the at least one workpiece (14) lying on the support table (12) by means of the first contact device (36) against a stationary contact device, in particular against an adjustable set square (70) of the panel dividing system.

13. Method according to claim 12, **characterized in that** said method further comprises the following steps:
- applying suction to the at least one workpiece (14) lying on the support table (12) by means of the suction device,
- moving the at least one workpiece (14) lying on the support table (12) to the stationary contact device, and
- releasing the at least one workpiece (14) lying on the support table (12) by the at least one suction device before the at least one workpiece (14) lying on the support table (12) is pressed by means of the first contact device (36) against the stationary contact device, preferably the release of the at least one workpiece (14) lying on the support table (12) by the at least one suction device being monitored by a position detecting device.

14. Method according to at least one of the preceding claims 12 or 13, **characterized in that** said method further comprises the following step:
- pressing the at least one workpiece (14) lying on the support table (12) by means of the third contact device (58) against an at least temporarily stationary contact device, in particular against at least one collet of a conveying device of the panel dividing system (64).

## Revendications

1. Installation de répartition de plaques (64) comprenant un dispositif de manutention (10) pour la manipulation d'au moins une pièce (14) se trouvant sur une table de support (12), de préférence d'une pile de pièces de préférence en forme de plaques, dans laquelle le dispositif de manutention (10) comprend une structure de base (16), pouvant être disposée au-dessus de l'au moins une pièce (14), avec une portion de liaison pour la liaison avec un dispositif de déplacement pouvant fonctionner mécaniquement, plus particulièrement un robot, grâce à laquelle la structure de base (16) peut être déplacée, et une pluralité de dispositifs d'aspiration pour une préhension d'une surface de matériau de l'au moins une pièce (14), dans laquelle, sur la structure de base (16), est monté au moins un premier dispositif d'appui (36) s'étendant au moins temporairement vers le bas, dans laquelle l'installation de répartition de plaques (64) est conçue pour amener le premier dispositif d'appui (36) en appui contre un premier bord latéral (72) de l'au moins une pièce (14) se trouvant sur la table de support (12) et pour coulisser ainsi l'au moins une pièce (14) se trouvant sur la table d'appui (12) de l'au moins une structure de base (16) disposée plus ou moins au-dessus de l'au moins une pièce (14) au moyen du dispositif d'appui (36) dépassant vers le bas, **caractérisé en ce que** la structure de base (16) puisse tourner autour d'un axe vertical, plus particulièrement au moyen d'un dispositif d'entraînement.

2. Installation de répartition de plaques (64) selon la revendication 1, **caractérisée en ce qu'**une position verticale d'une portion d'appui (34) du premier dispositif d'appui (36) par rapport à la structure de base (16) peut être modifiée et le dispositif de manutention (10) comprend plus particulièrement un dispositif d'entraînement (32) mécanique, plus particulièrement pneumatique, pour la modification de la position verticale de la portion d'appui (34) du premier dispositif d'appui (36) par rapport à la structure de base (16).

3. Installation de répartition de plaques (64) selon au moins l'une des revendications précédentes, **caractérisée en ce que** le premier dispositif d'appui (36) comprend deux portions d'appuis (34) distantes entre elles.

4. Installation de répartition de plaques (64) selon au moins l'une des revendications précédentes, **caractérisée en ce que**, sur la structure de base (16), est monté au moins un deuxième dispositif d'appui (37) s'étendant au moins temporairement vers le bas, qui peut être amené en appui contre un deuxième bord latéral (74) de l'au moins une pièce (14) se trouvant sur la table de support (12), dans laquelle le deuxième bord latéral (74) est disposé de manière opposée et au moins globalement parallèle au premier bord latéral (72) de l'au moins une pièce (14), et **en ce que**, plus particulièrement, une portion d'appui (34) du premier dispositif d'appui (36) et une portion d'appui (38) du deuxième dispositif d'appui (37) sont disposées à une distance variable entre elles de façon à ce que l'au moins une pièce (14) se trouvant sur la table de support (12) puisse être serrée entre la portion d'appui (34) du premier dispositif d'appui (36) et la portion d'appui (38) du deuxième dispositif d'appui (37).

5. Installation de répartition de plaques (64) selon au moins l'une des revendications précédentes, **caractérisée en ce que**, sur la structure de base (16), est monté au moins un troisième dispositif d'appui (58) s'étendant au moins temporairement vers le bas, qui peut être amené en appui contre un troisième bord latéral (76) de l'au moins une pièce (14) se trouvant sur la table de support (12), dans laquelle le troisième bord latéral (76) est disposé de manière au moins globalement orthogonale au premier bord latéral (72) et au deuxième bord latéral (74).

6. Installation de répartition de plaques (64) selon au moins l'une des revendications précédentes, **caractérisée en ce qu'**elle comprend une commande pneumatique au moyen de laquelle le dispositif d'aspiration peut fonctionner avec une première dépression prédéfinie et une deuxième dépression prédéfinie, dans laquelle les dépressions prédéfinies dépendent de préférence d'un poids de la pièce et plus particulièrement d'une rugosité de la surface de la pièce, et dans laquelle la première dépression prédéfinie est suffisante pour soulever la pièce et la deuxième dépression prédéfinie est suffisante pour déplacer la pièce de manière coulissante au-dessus de la table de prélèvement.

7. Installation de répartition de plaques (64) selon au moins l'une des revendications précédentes, **caractérisée en ce qu'**elle comprend un dispositif de détection de position qui est conçu pour surveiller si la pièce est libérée après l'arrêt du dispositif d'aspiration, plus particulièrement si le dispositif d'aspiration est éloigné de la pièce.

8. Installation de répartition de plaques (64) selon au moins l'une des revendications précédentes, **caractérisée en ce qu'**elle comprend un autre dispositif de détection de position ou le dispositif de détection de position, qui est conçu pour surveiller si, avant la préhension de la pièce respectivement de la pile de pièces par le premier dispositif d'appui et le deuxième dispositif d'appui, au moins un bord latéral de la pièce respectivement de la pile de pièces, lors d'une approche du dispositif de manutention de la pièce respectivement de la pile de pièces, a atteint une distance horizontale prédéfinie par rapport au premier dispositif d'appui ou si, avant l'aspiration de la pièce par le dispositif d'aspiration, tous les dispositifs partiels d'aspiration prédéfinis du dispositif d'aspiration, prédéfinis pour l'aspiration, se trouvent de manière entièrement verticale au-dessus de la surface de la pièce.

9. Installation de répartition de plaques (64) selon au moins l'une des revendications précédentes, **caractérisée en ce qu'**elle comprend un autre dispositif de détection de position ou le dispositif de détection de position, qui est conçu pour surveiller qu'une extrémité inférieure verticale de l'au moins un dispositif d'appui, lors de l'approche du dispositif de manutention de la pièce respectivement de la pile de pièces, ne tombe pas en dessous d'une distance prédéfinie par rapport à la surface de support de la pièce respectivement de la pile de pièces.

10. Installation de répartition de plaques (64) selon au moins l'une des revendications précédentes, **caractérisée en ce que** l'installation de répartition de plaques (64) comprend en outre un dispositif d'appui stationnaire réglable en hauteur, plus particulièrement une règle angulaire réglable en hauteur, pour l'orientation de l'au moins une pièce (14) respectivement de la pile de pièces, et **en ce que** l'installation de répartition de plaques (64) est conçue pour adapter une position verticale, plus particulièrement une hauteur maximale, de la règle angulaire par rapport à une surface de support de l'au moins une pièce respectivement de la pile de pièces à la hauteur de l'au moins une pièce (14) respectivement de la pile de pièces et/ou à une position instantanée du dispositif de manutention (10).

11. Procédé de fonctionnement d'une installation de répartition de plaques (64), **caractérisé en ce qu'**il s'agit d'une installation de répartition de plaques (64) selon au moins l'une des revendications précédentes et **en ce que** le procédé comprend les étapes suivantes:
- déplacement du dispositif de manutention (10) au-dessus de l'au moins une pièce (14) se trouvant sur la table de support (12), de façon à ce que le premier dispositif d'appui (36) soit disposé contre le premier bord latéral (72) de l'au moins une pièce (14) se trouvant sur la table de support (12) et
- coulissement de l'au moins une pièce (14) se trouvant sur la table de support (12) par la structure de base (16) disposée plus ou moins au-dessus de l'au moins une pièce (14) au moyen du dispositif d'appui (36) dépassant vers le bas.

12. Procédé selon la revendication 11, **caractérisé en ce qu'**il comprend en outre l'étape suivante : sollicitation de l'au moins une pièce (14) se trouvant sur la table de support (12) au moyen du premier dispositif d'appui (36) contre un dispositif d'appui stationnaire, plus particulièrement contre une règle angulaire (70) de l'installation de répartition de plaques.

13. Procédé selon la revendication 12, **caractérisé en ce qu'**il comprend en outre les étapes suivantes:
- aspiration de l'au moins une pièce (14) se trouvant sur la table de support (12) au moyen du dispositif d'aspiration,
- déplacement de l'au moins une pièce (14) se trouvant sur la table de support (12) vers le dispositif d'appui stationnaire et
- libération de l'au moins une pièce (14) se trouvant sur la table de support (12) par l'au moins un dispositif d'aspiration avant la sollicitation de l'au moins une pièce (14) se trouvant sur la table de support (12) au moyen du premier dispositif d'appui (36) contre le dispositif d'appui stationnaire, de préférence dans lequel la libération de l'au moins une pièce (14) se trouvant sur la table de support (12) par l'au moins un dispositif d'aspiration est surveillée par un dispositif de détection de position.

14. Procédé selon au moins l'une des revendications précédentes 12 ou 13, **caractérisé en ce qu'**il comprend en outre l'étape suivante:
- sollicitation de l'au moins une pièce (14) se trouvant sur la table de support (12) au moyen du troisième dispositif d'appui (58) contre un dispositif d'appui au moins temporairement stationnaire, plus particulièrement contre au moins une pince de serrage d'un dispositif de convoyage de l'installation de répartition de plaques (64).
